# EUROPÄISCHE PATENTSCHRIFT

(11) **EP 2 753 905 B1**
(45) Veröffentlichungstag und Bekanntmachung des Hinweises auf die Patenterteilung: **21.09.2016**
(21) Anmeldenummer: 12759011.5
(22) Anmeldetag: 28.08.2012
(51) Int. Cl.: B60P 1/43, B65B 61/04, B65B 3/00, B29C 49/04, B29C 49/78, B29C 51/44, B29C 51/46, G01L 5/00, G01N 35/02

(54) **VERFAHREN ZUR FESTSTELLUNG DES VORLIEGENS VON VORGEGEBENEN EIGENSCHAFTEN EINES BEHÄLTERERZEUGNISSES UND VORRICHTUNG ZUR DURCHFÜHRUNG DES VERFAHRENS**
METHOD FOR ESTABLISHING THE PRESENCE OF SPECIFIED CHARACTERISTICS OF A CONTAINER PRODUCT AND DEVICE FOR PERFORMING SAID METHOD
PROCÉDÉ POUR DÉTERMINER LA PRÉSENCE DE CARACTÉRISTIQUES PRÉDÉFINIES D'UN PRODUIT COMPOSÉ DE CONTENANTS ET DISPOSITIF POUR LA MISE EN OEUVRE DUDIT PROCÉDÉ

(30) Priorität: 06.09.2011 US 201161531262 P
(43) Veröffentlichungstag der Anmeldung: 16.07.2014
(73) Patentinhaber: Kocher-Plastik Maschinenbau GmbH, 74429 Sulzbach-Laufen (DE)
(72) Erfinder: PRICE, Jeffrey, L., Windermere, FL 34786 (US)
(74) Vertreter: Bartels, Martin Erich Arthur
(86) Internationale Anmeldenummer: PCT/EP2012/003612
(87) Internationale Veröffentlichungsnummer: WO 2013/034255

(56) Entgegenhaltungen:
- EP-A1- 0 026 828
- EP-A1- 0 328 249
- EP-A1- 2 269 558
- EP-A2- 0 328 374
- WO-A1-92/11515
- DE-U1-202010 015 629
- US-A- 4 912 318

## Beschreibung

Die Erfindung betrifft ein Verfahren zur Feststellung des Vorliegens von vorgegebenen Eigenschaften eines im Blasform-, Füll- und Siegelverfahren hergestellten Behältererzeugnisses mit den Merkmalen im Oberbegriff von Anspruch 1. Ferner betrifft die Erfindung eine Vorrichtung zur Durchführung dieses Verfahrens mit den Merkmalen im Oberbegriff von Anspruch 9.

Behältererzeugnisse aus Kunststoffmaterialien kommen in verschiedensten Formen, Größen und Ausstattungen als Massenerzeugnisse in weiter Verbreitung und für die unterschiedlichsten Verwendungszwecke zum Einsatz. Bei der Herstellung, die angesichts der hohen Stückzahlen aus wirtschaftlichen Gründen besonders rationell erfolgen muss, ist es unabdingbar, dass in enger Verknüpfung zum jeweiligen Herstellungsprozess eine Qualitätskontrolle stattfindet, die es ermöglicht, Abweichungen vorgegebener Eigenschaften des Erzeugnisses vom betreffenden Soll-Wert zu erkennen und dadurch zu ermöglichen, dass korrigierende Eingriffe bei der Fertigungsanlage vorgenommen werden, bevor größere Ausschussmengen produziert werden.

Diesbezüglich ist es Stand der Technik, in vorgegebenen Zeitabständen aus der betreffenden Produktionslinie Probechargen abzuzweigen und auf Abweichungen vorgegebener, wichtiger Gebrauchseigenschaften vom Soll-Wert zu untersuchen. Dies gestaltet sich umständlich und zeitraubend, insbesondere wenn, um zuverlässige Prüfungsergebnisse zu erlangen, Probechargen mit größerer Anzahl von Behältern untersucht werden sollen, die manuell gehandhabt und von geschultem Prüfpersonal auf das Vorliegen vorgegebener Eigenschaften untersucht werden. Der erforderliche Zeitaufwand und die anfallenden Personalkosten beeinträchtigen die Wirtschaftlichkeit der Herstellung der Behältererzeugnisse.

Die EP 2 392 516 A1 und die EP 0 328 249 A1 beschreiben jeweils ein Verfahren zur Feststellung des Vorliegens von vorgegebenen Eigenschaften eines Behältererzeugnisses, insbesondere aus Kunststoffmaterial bestehend, wobei in mindestens einer Prüfstation einer Prüfvorrichtung der Ist-Wert zumindest einer vorgegebenen Eigenschaft automatisch erfasst und mit dem Soll-Wert dieser Eigenschaft verglichen wird.

Weitere Verfahren bzw. Vorrichtungen sind aus der DE 20 2010 015 629 U1, EP 0 026 828 A1, EP 0 328 374 A2, EP 2 269558 A1, US 4,912,318 und WO 92/11515 bekannt.

Im Hinblick hierauf stellt sich die Erfindung die Aufgabe, ein Verfahren zur Verfügung zu stellen, das durch eine rationelle Gestaltung der Qualitätskontrolle eine Voraussetzung für eine verbesserte Wirtschaftlichkeit bei der Herstellung von Behältererzeugnissen schafft.

Erfindungsgemäß ist diese Aufgabe durch ein Verfahren gelöst, das die Maßnahmen des Patentanspruches 1 in seiner Gesamtheit aufweist.

Gemäß dem Kennzeichen von Anspruch 1 ist vorgesehen, dass
- bei einem Behältererzeugnis in Form eines Behälterbandes mit aus Kunststoff bestehenden Behältern, die an Verbindungsstellen trennbar miteinander zusammenhängen, die Behälter maschinell separiert werden und die beim Separieren erforderliche Trennkraft erfasst wird, oder
- in einer eigenständigen, vorzugsweise ersten Prüfstation Behälter durch Abdrehen vom Behälterband separiert werden und das zum Abdrehen erforderliche Drehmoment automatisch erfasst wird, und/oder
- bei mit einem Behälterinhalt befüllten Behältern die separierten Behälter maschinell in eine Prüfstation verbracht und in dieser für eine automatische Erfassung ihres Gesamtgewichts gewogen werden, und die gewogenen Behälter maschinell in eine Prüfstation verbracht und dort entleert werden, und die entleerten Behälter maschinell in eine Prüfstation verbracht und in dieser für eine Erfassung ihres Leergewichts gewogen werden und für die Feststellung des Gewichts des Behälterinhalts das erfasste Gesamtgewicht automatisch mit dem erfassten Leergewicht verglichen wird.

Dadurch, dass der Ist-Wert zumindest einer vorgegebenen Eigenschaft automatisch in einer Prüfstation einer Prüfvorrichtung erfasst und mit dem Soll-Wert dieser Eigenschaft verglichen wird, entfällt die Notwendigkeit, die entsprechenden Prüfvorgänge durch Prüfpersonal durchführen zu lassen, was zu entsprechenden Einsparungen an Zeit und Personalkosten führt. Insbesondere bei der in Frage kommenden hohen Stückzahl herzustellender Behältererzeugnisse resultiert dadurch eine wesentliche Verbesserung der Wirtschaftlichkeit. Durch die Automatisierung der Prüfschritte ist darüber hinaus erreicht, dass subjektive Prüffehler, wie sie durch Einsatz von Prüfpersonal nicht völlig auszuschließen sind, einen negativen Einfluss auf das Messergebnis haben. Da mithin mit einer sehr hohen Verlässlichkeit sich die Prüfergebnisse zusammenfassen lassen, kann man diese direkt an die in der Prozessreihenfolge jeweils vorgeschaltete Herstellmaschine weiterleiten, um deren Herstellprozess zu optimieren.

Bei einer entsprechenden Anzahl von der Prüfung zugehörigen Prüfstationen lassen sich so auf rationelle Weise verschiedene wesentliche Erzeugniseigenschaften feststellen, wie Gewichte, etwa als Maß der Füllmenge eines Behälterinhalts, die Wanddicke des Behälters, der Kraftaufwand, der für Handhabung und/oder Benutzung eines Behälters erforderlich ist, und dergleichen.

Behältererzeugnisse mit Kunststoffbehältern lassen sich in großen Stückzahlen vorteilhaft nach dem bekannten bottelpack^{®}-Verfahren in der Weise herstellen, dass das Behältererzeugnis in Form eines Behälterbandes mit aus Kunststoff bestehenden Behältern, beispielsweise als Fläschchen oder Ampullen, erzeugt wird, die an Verbindungsstellen trennbar miteinander verbunden sind.

Bei Behältern, die an einem Halsteil ein einem Entnahmebereich zugeordnetes Endteil aufweisen, das durch eine Drehbewegung vom Behälterhauptteil entfernbar ist, werden die Behälter maschinell in eine Prüfstation verbracht, in der das Endteil maschinell abgedreht und das zum Abdrehen erforderliche Drehmoment automatisch erfasst wird. Bei Behältern in der Art von Ampullen handelt es sich bei einem am Halsteil befindlichen Endteil häufig um einen Drehknebel, der an einer Soll-Bruchstelle vom Halsteil abdrehbar ist. Die Erfassung des Drehmoments liefert hierbei eine Aussage darüber, ob die Soll-Bruchstelle in geeigneter Weise so gestaltet ist, dass der Benutzer das Endteil bequem entfernen kann. In entsprechender Weise kann bei andersartigen Behältern, etwa Fläschchen, die am Halsteil einen Entnahmebereich mit Schraubverschlüssen aufweisen, eine entsprechende Drehmomenterfassung das Vorliegen von Gebrauchseigenschaften signalisieren.

Vorteilhaft können die Behälter maschinell in eine Prüfstation verbracht werden, in der maschinell ein Einschnitt, der den Querschnitt zumindest eines Teils der Behälterwand freilegt, gebildet wird. Dadurch eröffnet sich die Möglichkeit, nachdem die geschnittenen Behälter maschinell in eine weitere Prüfstation verbracht wurden, die Dicke zumindest einer geschnittenen Behälterwand automatisch zu erfassen.

Anstelle einer zerstörenden Prüfung des Behälters zur Feststellung der Wanddicke an mindestens einer Messstelle des Behälters kann hierauf auch verzichtet werden und insoweit eine zerstörungsfreie Prüfung der Behälterdicke an mindestens einer Stelle stattfinden, indem man beispielsweise den Behälter mittels Ultraschall oder mittels optischer Messverfahren im Hinblick auf seine jeweilige Wanddicke prüft. Die zerstörungsfreie Prüfung hat auch den Vorteil, dass etwaig bei der zerstörenden Prüfung des Behälters anfallender Trenn- oder Sägestaub nicht entsteht, bei dem trotz geeigneter Absaugung nicht völlig ausgeschlossen werden kann, dass er andere Prüfstationen in ihrer Messgenauigkeit beeinträchtigt.

Vorzugsweise werden die Behälter in einem abschließenden Verfahrensschritt, beispielsweise nach der Erfassung der Wanddicke, maschinell in eine Auswerfstation verbracht und von dieser aus der Prüfvorrichtung ausgetragen, so dass der Gesamtablauf des Verfahrens maschinell erfolgen kann, ohne dass Eingriffe durch Personal vorzunehmen sind. Die einzelnen Verfahrensschritte unter Einbezug der jeweiligen Vorrichtungs-Prüfstationen können auch vereinzelt werden, ohne den automatischen Charakter der Prüfvorgänge zu beeinträchtigen. Auch können die Prüfverfahrensschritte nebst den Vorrichtungen in abweichenden Konstellationen hintereinander angeordnet werden.

Das erfindungsgemäße Verfahren lässt sich um weitere Prüfvorgänge erweitern. So könnte man beispielsweise mittels mechanischen oder optischen Abtastverfahren etwaige Beschriftungen auf der Behälteroberseite oder in anderen Bereichen erfassen und im Hinblick auf die Ausführungsqualität und Vollständigkeit der Zeichenangaben überprüfen.

Auch können neben den beschriebenen Verfahren weitere Prüfverfahren zum Einsatz kommen, bei denen man beispielsweise mittels einer Ultraschall- oder Laserstrahlmessung in verschiedenen Bereichen des Behälters und seiner Teile deren Wandstärke ermitteln kann, wobei man dahingehende Messverfahren unter gegebenenfalls Einbezug von akustischen Messstationen auch zur Feststellung der Behälterinhaltsmenge mit heranziehen kann.

Aufgrund des modulartigen Baukastensystems betreffend die einzelnen Prüfvorrichtungen mit denen man die vorstehend beschriebenen Prüfverfahren durchführen kann, die sich auch leicht an verschiedene Bauformen von Ampullen und Behältererzeugnissen anpassen lassen, besteht auch die Möglichkeit bandartig miteinander zusammenhängende Behälter- oder Ampullenerzeugnisse, Einzelbehälter oder Einzelampullen wie vorstehend beschrieben zu prüfen.

In Ergänzung des erfindungsgemäßen Verfahrens kann bevorzugt mittels elektronischer Erfassungs-, Speicher- und Auswertemedien an mindestens einer der messenden Prüfstationen, deren Messwerte für zumindest einen Teil der Behälter erfasst und gespeichert werden zwecks Erhalt einer statistischen Auswertung, in welcher Richtung (trending) und um welchen Betrag sich die ermittelten Ist-Werte der Prüfstationen von den Sollwert-Vorgaben entfernen. Die erhaltenen Differenzwerte zwischen Ist- und Sollwert-Vorgaben werden an eine Maschinensteuerung einer Herstellvorrichtung weitergeleitet mit der Maßgabe, während oder mit Beginn oder bei Ende des Herstellprozesses die Herstellparameter derart zu optimieren, dass die Differenzwerte gegen Null gehen oder dass das der Herstellvorrichtung zuzuführende Fertigungsmaterial in seinen Materialeigenschaften angepasst wird.

Wird also beispielsweise statistisch festgestellt, dass der Behälterinhalt vom Volumen her bestimmte Sollwert-Vorgaben unter- bzw. überschreitet, kann man aufgrund der statistischen Auswertung die Herstellvorrichtung veranlassen, weniger bzw. mehr Füllmenge in die jeweiligen Behälter einzuspeisen. Erweisen sich die Drehmomentwerte beim Abscheren oder Abdrehen (twist-off) in der ein oder anderen Richtung bezogen auf die Sollwert-Vorgaben als nicht genügend, kann man durch Ändern des eingesetzten Kunststoffmaterials oder durch Verändern der Wanddicke die benötigten Werte auch während des Herstellvorganges erreichen. Sofern sich geringe Differenzwerte zwischen Ist- und Sollwert-Vorgaben ermitteln lassen und die genannte statistische Auswertung Trends in der Herstellentwicklung erkennen lässt, kann man Abweichungen wirksam begegnen. In Erweiterung der vorstehend beschriebenen Maßnahmen lassen sich die statistischen Auswertungen auch entsprechend ablegen und dokumentieren, so dass bei einer Kundenabnahme der Herstellvorrichtung und/oder der Behältererzeugnisse die Herstellverfahrens-Historie aufgezeigt werden kann.

Gegenstand der Erfindung ist auch eine Vorrichtung zur Durchführung des Verfahrens mit den Merkmalen von Patentanspruch 9. Vorteilhafte Ausführungsformen der Vorrichtung sind in den Patentansprüchen 10 bis 20 angegeben.

In besonders vorteilhafter Weise kann die Vorrichtung so gestaltet sein, dass eine Transporteinrichtung vorgesehen ist, die Aufnahmen aufweist, die durch die erste Prüfstation mit einem jeweiligen Behälter bestückbar sind, wobei die Aufnahmen zu weiteren, entlang einer Prüfstrecke angeordneten Prüfstationen bewegbar sind.

Zweckmäßigerweise weist die Transporteinrichtung ein motorisch antreibbares Karussell auf, das die Aufnahmen entlang einer kreisrunden Prüfstrecke zu weiteren, an der Prüfstrecke angeordneten Prüfstationen bewegt.

Alternativ kann die Anordnung so getroffen sein, dass die Prüfstationen entlang einer sich in einer Längsrichtung erstreckenden Prüfstrecke angeordnet sind, wobei eine Transporteinrichtung ein Transportelement aufweist, das die Behälter nacheinander von Prüfstation zu Prüfstation bewegt.

Nachstehend ist die Erfindung anhand von in Zeichnungen dargestellten Ausführungsbeispielen im Einzelnen erläutert. Es zeigen:
- Fig. 1: eine stark schematisch vereinfachte Draufsicht eines ersten Ausführungsbeispiels einer Vorrichtung für die Durchführung des erfindungsgemäßen Verfahrens;
- Fig. 2: eine schematisch vereinfachte perspektivische Schrägansicht der Vorrichtung von Fig. 1;
- Fig. 3: eine in größerem Maßstab gezeichnete perspektivische Schrägansicht lediglich eines Teilausschnitts einer eine Separiereinrichtung aufweisenden ersten Prüfstation der Vorrichtung;
- Fig. 4: eine gegenüber Fig. 3 in etwas kleinerem Maßstab gezeichnete perspektivische Schrägansicht der ersten Prüfstation;
- Fig. 5: einen vergrößerten, in perspektivischer Schrägansicht gezeichneten Teilausschnitt aus Fig. 2, in dem hauptsächlich der Bereich einer zweiten Prüfstation gezeigt ist, die eine Wiegeeinrichtung aufweist;
- Fig. 6: eine vergrößerte perspektivische Schrägansicht eines Teils der Wiegeeinrichtung der zweiten Prüfstation;
- Fig. 7: eine gegenüber Fig. 1 und 2 vergrößert und stark schematisch vereinfacht gezeichnete Ansicht einer eine Entleereinrichtung aufweisenden dritten Prüfstation;
- Fig. 8: eine gegenüber Fig. 2 leicht vergrößert gezeichnete perspektivische Schrägansicht einer fünften Prüfstation mit einer Einrichtung zum Abdrehen eines Behälterendteils;
- Fig. 9: eine gegenüber Fig. 2 geringfügig vergrößert gezeichnete perspektivische Schrägansicht, die hauptsächlich den Bereich einer sechsten Prüfstation mit einer Schneideinrichtung zeigt;
- Fig. 10: eine vergrößert gezeichnete Seitenansicht eines Teilbereichs einer siebten Prüfstation mit einer Einrichtung zum Messen von Behälter-Wanddicken;
- Fig. 11: eine stark schematisch vereinfacht gezeichnete, perspektivische Schrägansicht eines zweiten Ausführungsbeispiels der erfindungsgemäßen Vorrichtung;
- Fig. 12: eine gegenüber Fig. 11 in größerem Maßstab und ebenfalls stark schematisch vereinfacht gezeichnete, perspektivische Schrägansicht, in der von dem Ausführungsbeispiel gemäß Fig. 11 lediglich die in Längsrichtung aufeinanderfolgenden Prüfstationen mit zugeordneter Transporteinrichtung gezeigt sind;
- Fig. 13: eine weiter vergrößert gezeichnete perspektivische Schrägansicht lediglich der Transporteinrichtung des zweiten Ausführungsbeispiels der Vorrichtung;
- Fig. 14: eine in größerem Maßstab gezeichnete perspektivische Schrägansicht lediglich eines Teilausschnitts einer eine Separiereinrichtung aufweisenden ersten Prüfstation gemäß dem zweiten Ausführungsbeispiel der Erfindung;
- Fig. 15: eine perspektivische Schrägansicht der ersten Prüfstation gemäß dem zweiten Ausführungsbeispiel der Erfindung;
- Fig. 16: eine vergrößerte perspektivische Schrägansicht der zweiten und vierten Prüfstation gemäß dem zweiten Ausführungsbeispiel der Erfindung;
- Fig. 17: eine weiter vergrößerte perspektivische Schrägansicht eines Teils der Wiegeeinrichtung der zweiten bzw. vierten Prüfstation gemäß dem zweiten Ausführungsbeispiel der Erfindung;
- Fig. 18: eine gegenüber Fig. 1 und 2 vergrößert und stark schematisch vereinfacht gezeichnete Ansicht einer eine Entleereinrichtung aufweisenden dritten Prüfstation gemäß dem zweiten Ausführungsbeispiel der Erfindung;
- Fig. 19: eine gegenüber Fig. 2 leicht vergrößert gezeichnete perspektivische Schrägansicht einer fünften Prüfstation mit einer Einrichtung zum Abdrehen eines Behälterendteils gemäß dem zweiten Ausführungsbeispiel der Erfindung; und
- Fig. 20: eine vergrößert gezeichnete Schrägansicht eines Teilbereichs einer siebten Prüfstation mit einer Einrichtung zum Messen von Behälter-Wanddicken gemäß dem zweiten Ausführungsbeispiel der Erfindung.

Nachstehend werden das erfindungsgemäße Verfahren und die zu dessen Durchführung vorgesehene Vorrichtung anhand zweier Beispiele erläutert, bei denen ein Behältererzeugnis in Form eines Behälterbandes aus Kunststoff eine Folge von einstückig mit dem Band ausgebildeten Behältern ampullenartiger Form aufweist, wie sie beispielsweise nach dem bekannten bottelpack^{®}-System in einem kombinierten Blasform-, Füll- und Siegelverfahren hergestellt werden können. Es versteht sich, dass das erfindungsgemäße Verfahren gleichermaßen bei andersartigen Behältern durchgeführt werden kann.

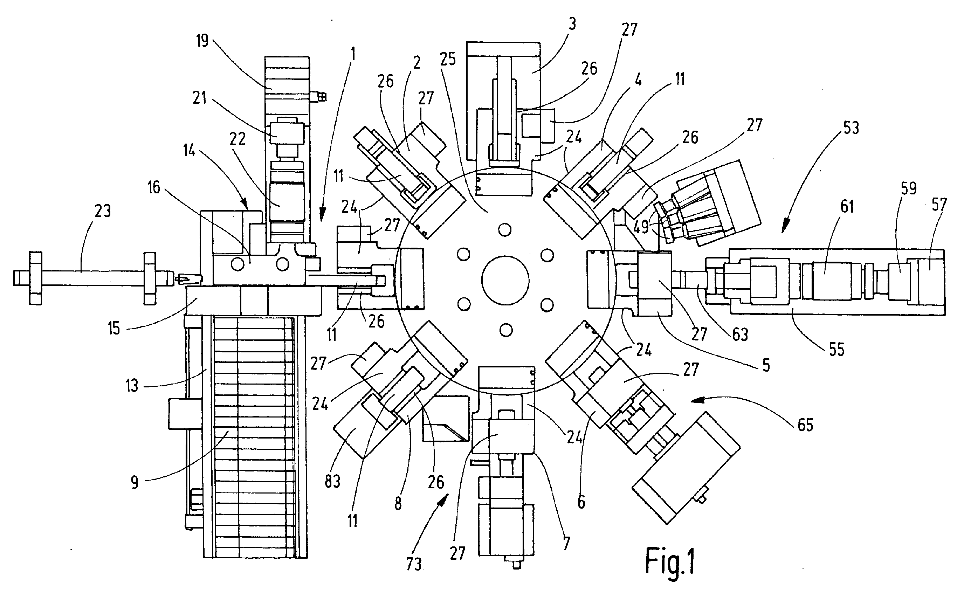

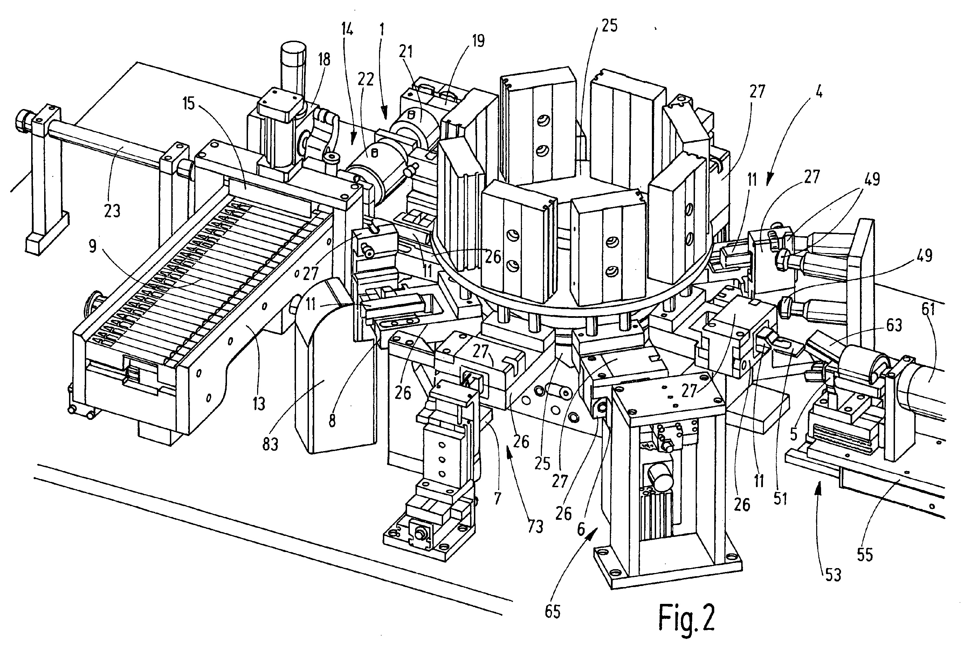

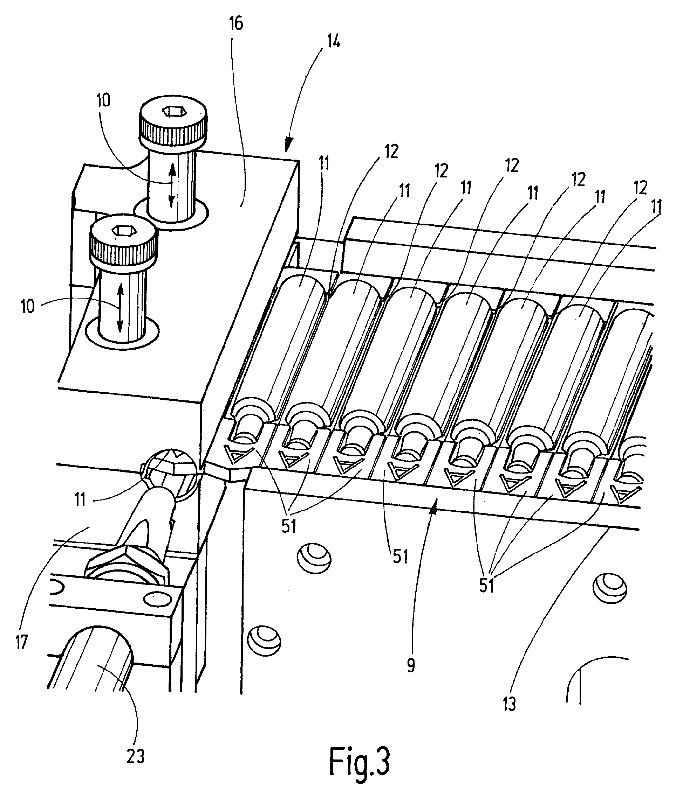

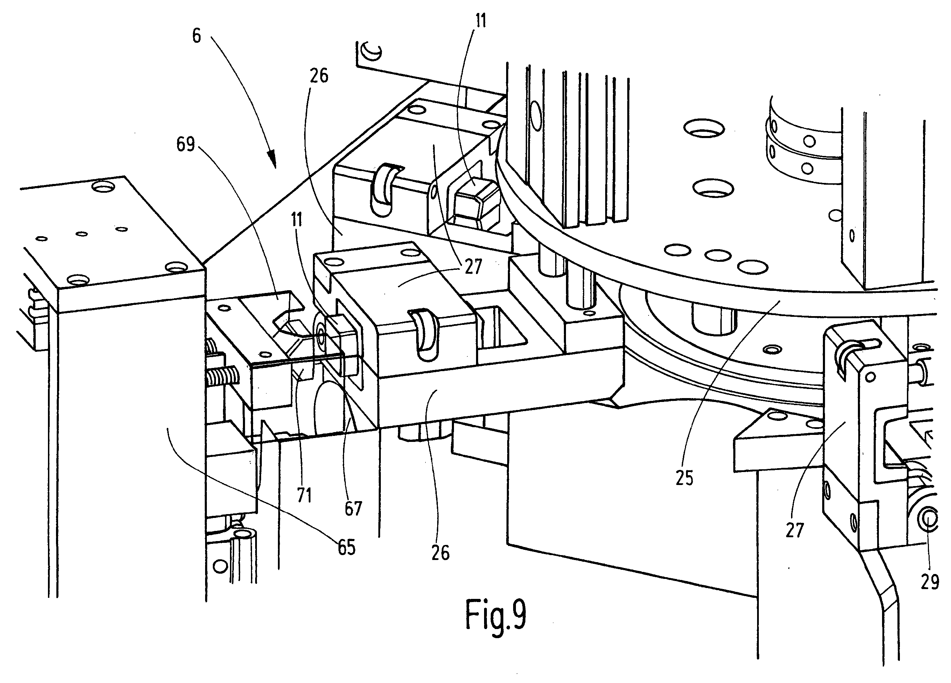

Bei dem in Fig.1 und 2 in Gesamtdarstellung und in Fig. 3 bis 10 in Teildarstellungen gezeigten ersten Ausführungsbeispiel der Vorrichtung weist diese mehrere Stationen auf, in die ein Behälter 11, über dessen Eigenschaften eine Feststellung getroffen werden soll, maschinell nacheinander verbracht wird. Die Stationen sind in Fig. 1 stark schematisch vereinfacht zeichnerisch angedeutet und in Fig. 2 nicht alle sichtbar. Dabei handelt es sich, siehe Fig. 1, um eine erste Prüfstation 1, eine zweite Prüfstation 2, eine dritte Prüfstation 3, eine vierte Prüfstation 4, eine fünfte Prüfstation 5, eine sechste Prüfstation 6, eine siebte Prüfstation 7 und eine Auswerfstation 8. Wie erwähnt, weist beim vorliegenden Beispiel ein Trägerband 9 eine Folge von ampullenartigen Behältern 11 auf, die an Verbindungsstellen 12 miteinander verbunden sind, die für das Separieren der Behälter 11 vom Behälterband 9 eine Soll-Bruchstelle bilden.

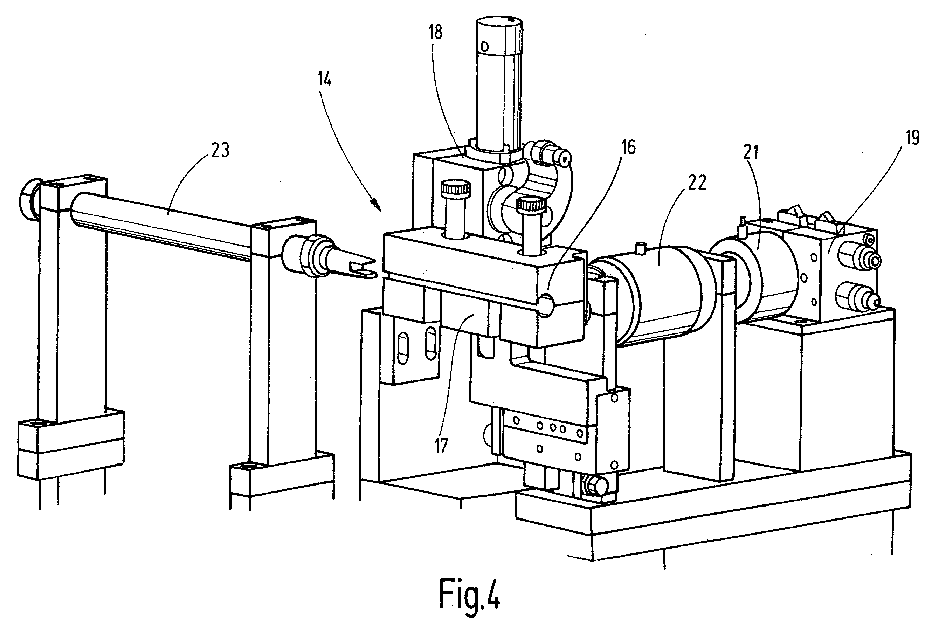

Wie die Fig. 1 bis 3 zeigen, wird das Behälterband 9 mittels eines Förderers 13 zur ersten Prüfstation 1 bewegt. Der Förderer 13 ist als Schrittförderer ausgebildet, der je Vorschubschritt jeweils einen Behälter 11 in eine Separierposition bewegt, in der eine Trenneinrichtung 14 den jeweils letzten Behälter 11 abtrennt. Die Trenneinrichtung 14 weist einen bewegbaren Niederhalter 15, siehe insbesondere Fig. 2, auf, der für einen jeweiligen Trennvorgang den jeweils vorletzten Behälter 11 des Bandes 9 fixiert. Um den in der Separierposition befindlichen, letzten Behälter 11 abzutrennen, weist die Trenneinrichtung 14, wie am besten aus Fig. 3 und 4 zu ersehen ist, für den abzutrennenden Behälter 11 einen Halter mit bewegbaren Backen 16 und 17 auf, die in der in Fig. 3 und 4 gezeigten Schließstellung den abzutrennenden Behälter 11 umfassen.

Für die Bewegung zwischen der gezeigten Schließstellung und einer geöffneten Zuführstellung, in der der abzutrennende Behälter 11 zwischen den Backen 16 und 17 aufgenommen ist, ist die in der Zeichnung obere Backe 16, wie mit Pfeilen 10 angedeutet, mittels eines Betätigers 18 bewegbar. Beide Backen 16, 17 mit dem zwischen ihnen eingefassten Behälter 11 sind zum Abdrehen an der Verbindungsstelle 12 mittels eines Drehantriebs 19 drehbar. Von diesem wird das Antriebsdrehmoment über eine Sicherheitskupplung 21 und einen Drehmomentsensor 22 auf die Backen 16, 17 übertragen. Für die Feststellung, ob die Beschaffenheit der Verbindungsstelle 12 dem Soll-Zustand entspricht, wird das vom Drehmomentsensor 22 ermittelte Abdreh-Drehmoment erfasst. Nach erfolgter Separierung, bei in die Ausgangs-Drehstellung zurückbewegten Backen 16, 17, wird der Behälter 11 mittels eines maschinell betätigten Schiebers 23 aus den Backen 16, 17 ausgeschoben und gelangt, wie am deutlichsten aus Fig.1 erkennbar ist, in eine Position, in der er sich in einer Aufnahme 24 eines Transportkarussells 25 befindet (siehe Fig. 1).

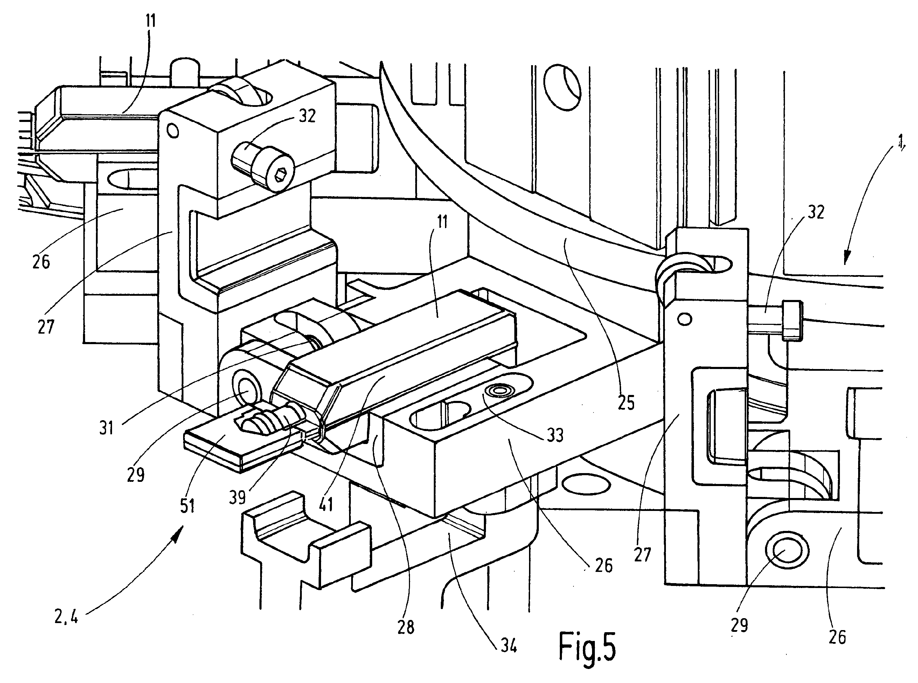

Das motorisch angetriebene Karussell 25 weist, auf seinem Umfang gleichmäßig verteilt, acht dieser Aufnahmen 24 auf und bewegt diese in einer Drehbewegung entlang einer kreisrunden Prüfstrecke, an der die Prüfstationen 1 bis 7 sowie die Auswerfstation 8 angeordnet sind. Die Aufnahmen 24 weisen jeweils ein Lagerungsteil 26 für den betreffenden Behälter 11 sowie ein bewegbares Deckelteil 27 auf, deren nähere Ausgestaltung am deutlichsten der Fig. 5 entnehmbar ist. Wie dort gezeigt, weist das Lagerungsteil 26 einen Sitz 28 für den betreffenden Behälter 11 auf. Das Deckelteil 27 ist am Lagerungsteil 26 durch ein Scharnier 29 angelenkt, auf dessen Gelenkachse eine Drehfeder 31 angeordnet ist, die das Deckelteil 27 in die in Fig. 5 gezeigte Offenstellung vorspannt. Das Deckelteil 27 weist einen Riegelzapfen 32 auf, der, wenn das Deckelteil 27 gegen die Kraft der Drehfeder 31 in die Schließstellung geschwenkt wird, mit einem Riegelschieber 33 in Eingriff kommt, der in Riegelstellung federvorgespannt ist. Bei Verschieben des Riegelschiebers 33 aus der Riegelstellung kehrt das Deckelteil 27 aus der Schließstellung selbsttätig in die in Fig. 5 gezeigte Offenstellung zurück. Wie den Fig. 1 und 2 entnehmbar ist, befinden sich die Deckelteile 27 in den Prüfstationen 1 bis 4 und in der Entnahmestation 8 jeweils in der Offenstellung und in den Prüfstationen 5 bis 7 jeweils in der Schließstellung. In der Schließstellung ist der betreffende Behälter 11 mit seinem Behälterhauptteil 41 jeweils im Sitz 28 des Lagerungsteils 26 fixiert.

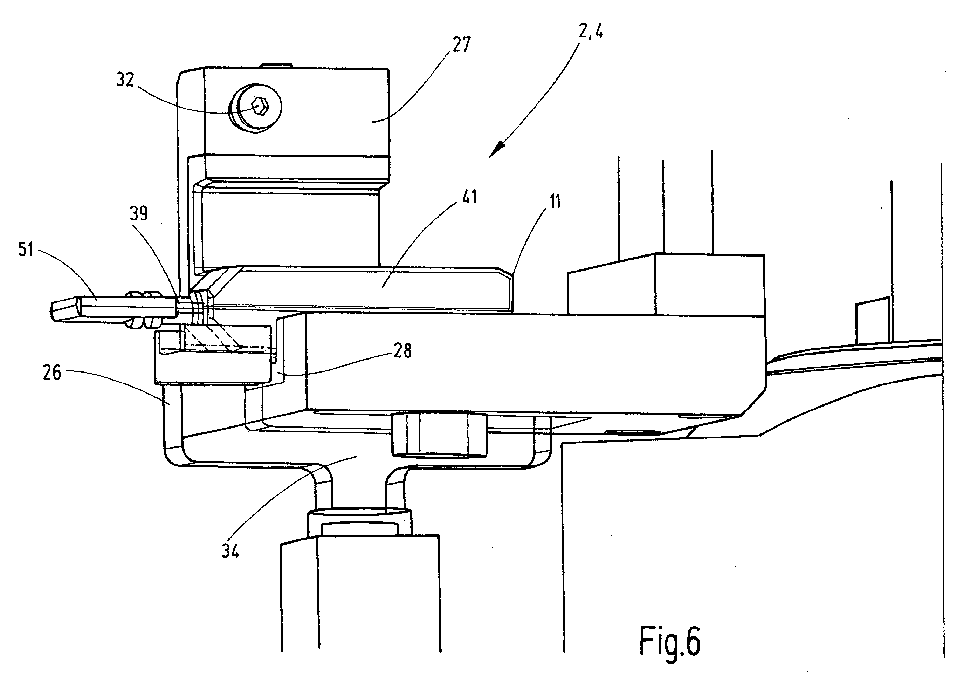

Nachdem in der ersten Prüfstation 1 das Abdreh-Drehmoment beim Separieren des Behälters 11 vom Behälterband 9 erfasst und der separierte Behälter 11 in die zugeordnete Aufnahme 24 am Karussell 25 verbracht ist, gelangt dieser Behälter 11 durch einen Drehschritt des Karussells 25 in die Prüfstation 2. Bei dieser handelt es sich um eine Wiegestation zur automatischen Erfassung des Gesamtgewichts des befüllten Behälters 11. Die Fig. 5 und 6 zeigen Einzelheiten der Wiegeeinrichtung mit einem als eine Art Wiegeschale fungierenden, vertikal bewegbaren Wiegeelement 34, das aus der in Fig. 5 gezeigten, abgesenkten Position nach oben verschiebbar ist, um den Behälter 11 durch Angriff an seinem vorderen Ende und an seinem hinteren Ende vom Sitz 28 des Lagerungsteils 26 abzuheben, um das Gewicht des abgehobenen Behälters 11 zu erfassen. Wie Fig. 5 und 6 zeigen, ist hierbei das Deckelteil 27 in der Offenstellung.

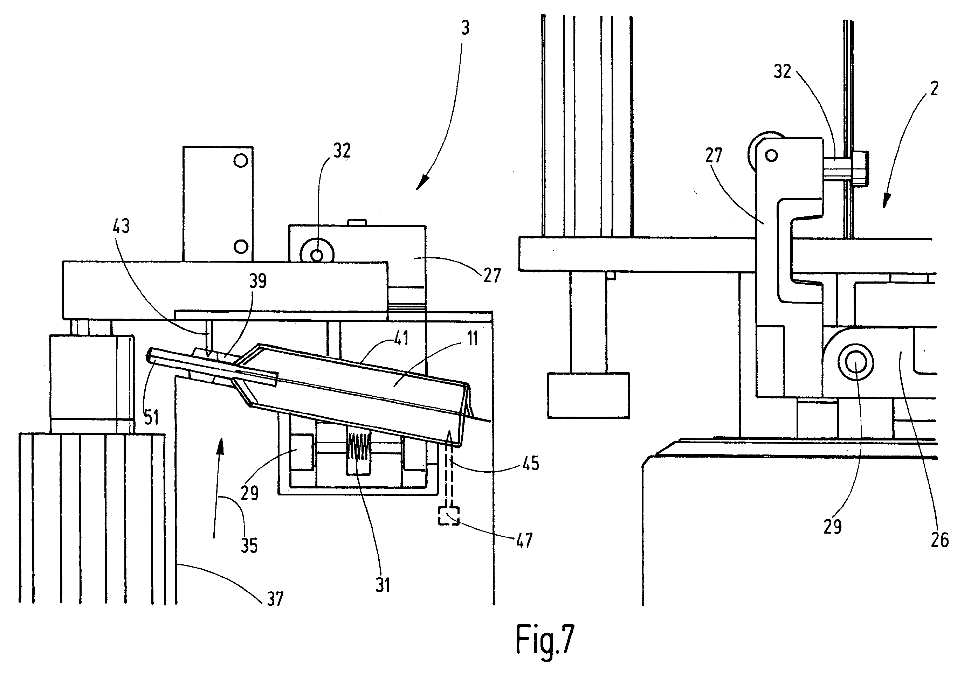

Nach Erfassen des Gesamtgewichts gelangt der gewogene Behälter 11 zur Prüfstation 3, die eine Einrichtung zum Entleeren des Behälterinhalts aufweist. Die wesentlichen Einzelheiten der Entleereinrichtung sind der Fig. 7 entnehmbar. Wie ersichtlich, weist die Prüfstation 3 eine in Richtung eines Pfeiles 35 bewegbare Auflage 37 für den Behälter 11 auf, die diesen in eine Schräglage bringt, bei der das Halsteil 39 des Behälters 11 höher liegt als das bodenseitige Ende des Behälterhauptteils 41. Zum Entleeren des Behälterinhalts wird durch eine bewegliche Punktiernadel 43 am Halsteil 39 ein Belüftungsloch gebildet, während am Bodenteil des Behälterhauptteils 41 eine bewegliche Kanüle 45 eine Entleerungsöffnung bildet. Die Kanüle 45 weist einen Sauganschluss 47 auf, um den Behälter 11 leer zu saugen.

Bei dem nächsten Transportschritt des Karussells 25 gelangt der entleerte Behälter 11 aus der Prüfstation 3 zur Prüfstation 4. Diese ist eine zweite Wiegestation, die in Aufbau und Funktion der bereits anhand der Fig. 5 und 6 beschriebenen Prüfstation 2 entspricht, abgesehen davon, dass nunmehr das Leergewicht des zuvor entleerten Behälters 11 erfasst wird. Als Prüfergebnis wird so durch den Vergleich Gesamtgewicht/Leergewicht die Masse des Behälterinhalts festgestellt.

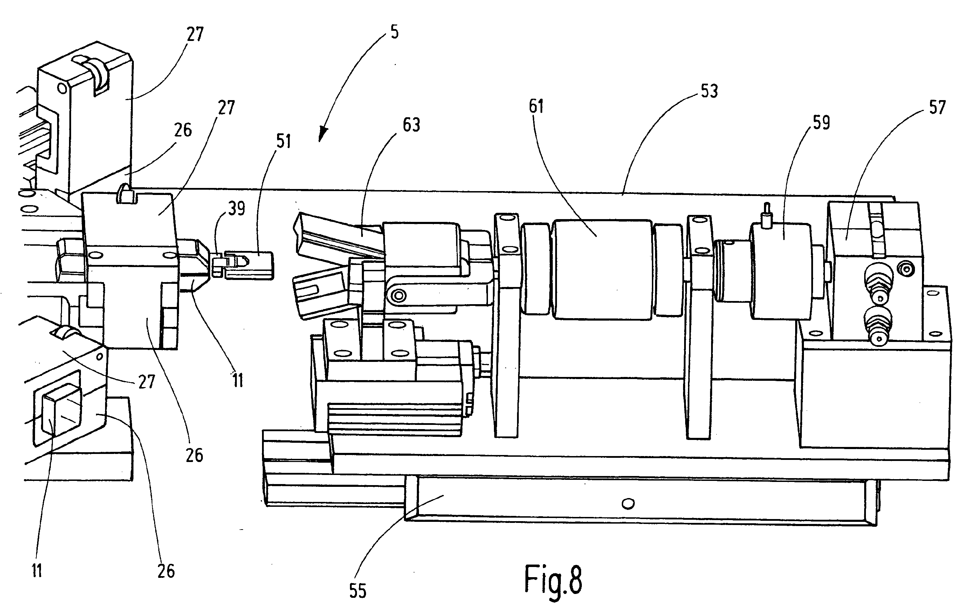

Im Zuge des Transportschrittes zu der folgenden Prüfstation 5 kommt das in Offenstellung befindliche Deckelteil 27, wie den Fig. 1 und 2 entnehmbar ist, mit einer Steuereinrichtung in Anlage, die Steuerrollen 49 aufweist, die das daran anlaufende Deckelteil 27 in die Schließstellung schwenken, wo der Riegelzapfen 32 mit dem Riegelschieber 33 verrastet, so dass das Deckelteil 27 in der Schließstellung gesichert ist. In dieser Position ist der Behälter 11 im Sitz 28 des Lagerungsteils 26 fixiert, siehe Fig. 8, die nähere Einzelheiten der betreffenden Prüfstation 5 zeigt. Diese weist eine Abdreheinrichtung 53 auf, die ein am Halsteil 39 des Behälters 11 angeformtes Endteil in Form eines sog. Drehknebels 51 durch Abdrehen vom Behälter 11 entfernt und hierbei das zum Abdrehen erforderliche Drehmoment erfasst. Die Abdreheinrichtung 53 weist hierfür eine auf einem Schlitten 55 verschiebbare Abdreheinheit auf, die mit einem Drehantrieb 57 über eine Sicherheitskupplung 59 und einen Drehmomentsensor 61 eine steuerbare Klemmzange 63 antreibt. Die Klemmzange 63 klemmt den Knebel 51 ein, so dass dieser mittels des Antriebs 57 abdrehbar ist. Das erfasste Abdreh-Drehmoment signalisiert, ob die Verbindung des Knebels 51 mit dem Behälter 11 dem Soll-Zustand entspricht.

Die entlang der Prüfstrecke nächstfolgende Prüfstation 6 weist eine Schneideinrichtung 65 mit einer Kreissäge 67 auf, die innerhalb einer mit einer Schutzhülle 69 aus Plexiglas befindlichen Schneidzone einen Einschnitt in Form eines Querschnitts durch den Behälter 11 bildet, der das vordere Teil 71 vom übrigen Hauptteil 41 des Behälters 11 abtrennt.

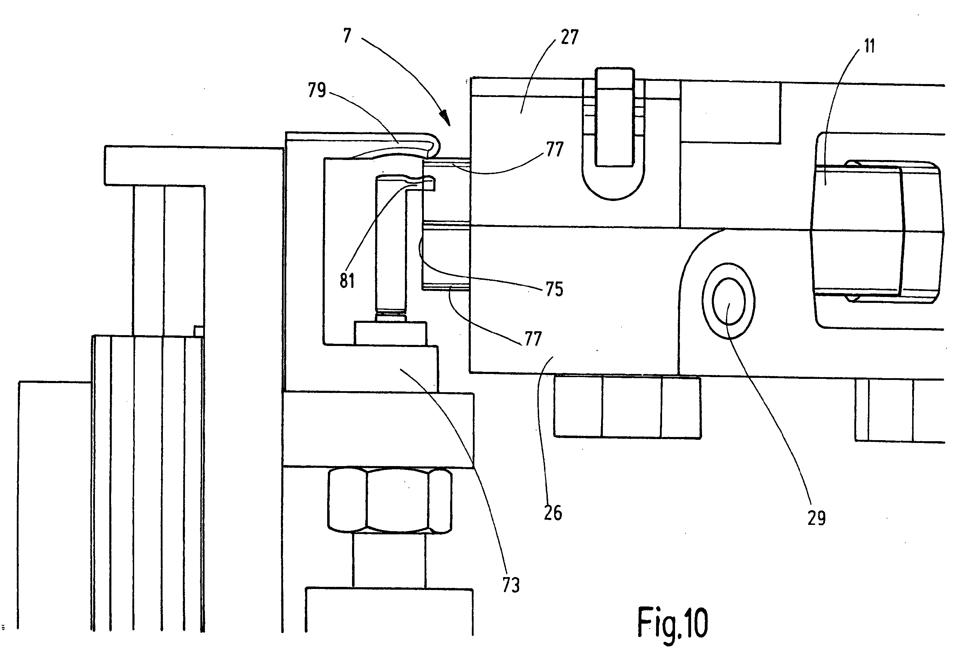

Beim nächsten Schritt gelangt der geschnittene Behälter 11 zur Prüfstation 7, die eine Messeinrichtung 73 aufweist, um die Wandstärke der an der Schnittstelle 75 freiliegenden Behälterwände 77 zu erfassen. Die Messeinrichtung 73 weist hierfür bewegliche Messtaster 79 und 81 auf, die verfahrbar sind, um die in Fig. 10 oben liegende Wand 77 und die untere Wand 77 abzutasten. Die Fig. 10 zeigt den Messvorgang an der oberen Wand 77 bevor der Taster 81 an der Innenseite dieser Wand 77 anliegt.

Nach Erfassung des Wanddicken-Istwertes in der Prüfstation 7 gelangt der Behälter 11 abschließend zur Auswerfstation 8, die den geprüften Behälter 11 in einen Abfallsammler 83 auswirft.

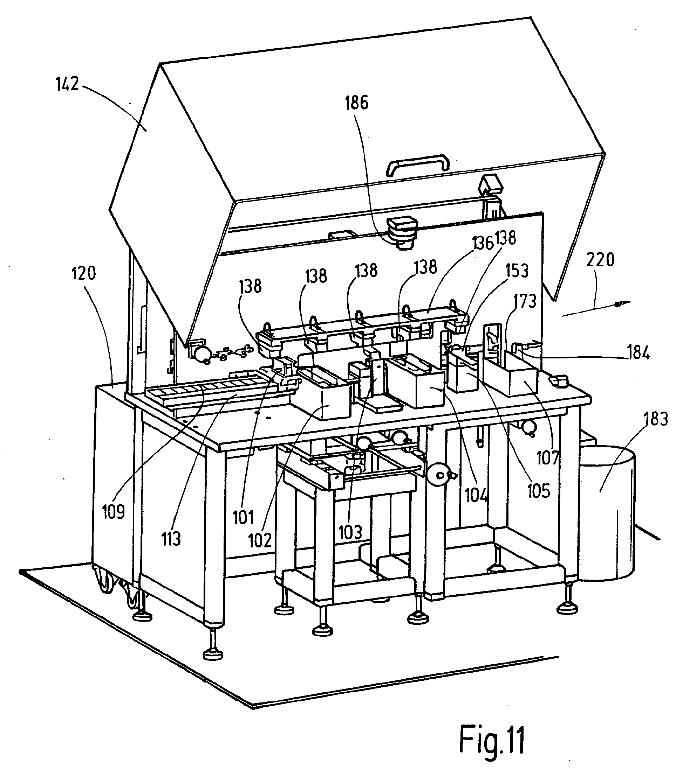

Das in Fig. 11 bis 20 gezeigte zweite Ausführungsbeispiel der erfindungsgemäßen Vorrichtung unterscheidet sich vom ersten Ausführungsbeispiel grundsätzlich dadurch, dass anstelle einer Prüfstrecke mit auf einer Kreisbahn angeordneten Prüfstationen 1 bis 7, die mittels einer Transporteinrichtung in Form eines Karussellförderers mit den zu prüfenden Behältern 111 versorgt werden, eine Prüfstrecke vorgesehen ist, die sich in einer Längsrichtung 220 erstreckt.

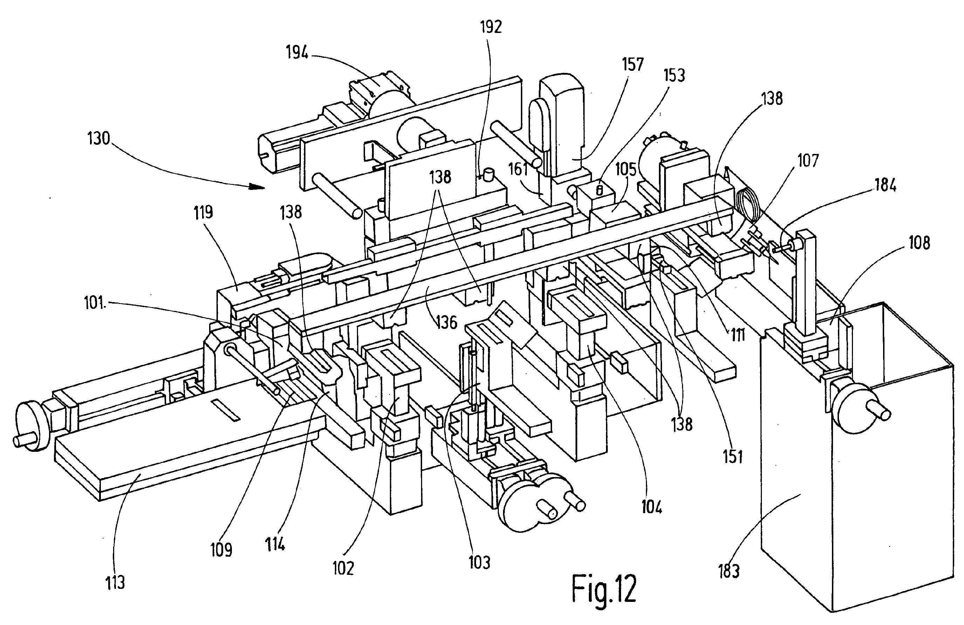

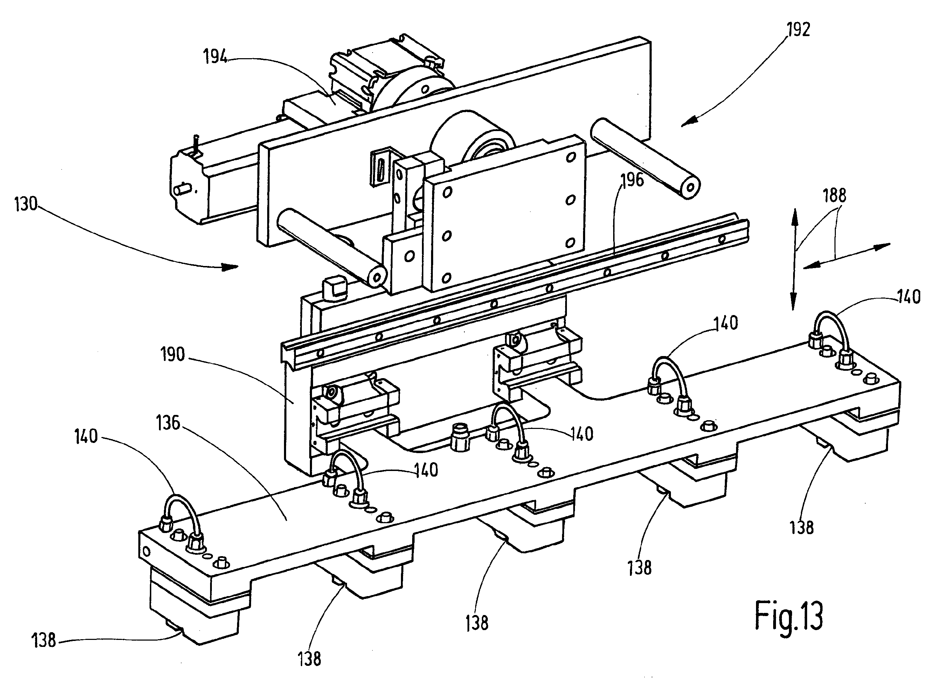

Bei dem in Fig.11 und 12 in Gesamtdarstellung und in Fig. 13 bis 20 in Teildarstellungen gezeigten zweiten Ausführungsbeispiel der Vorrichtung weist diese mehrere Stationen auf, in die ein Behälter 111, über dessen Eigenschaften eine Feststellung getroffen werden soll, maschinell nacheinander verbracht wird, und die in Fig. 11 und 12 schematisch vereinfacht zeichnerisch dargestellt und von denen in Fig. 12 nicht sämtliche Stationen sichtbar sind.

Wie die Fig. 11 zeigt, ist die Prüfstrecke auf einem Gestell 120 mit einer Abdeckhaube 142 angeordnet. Eine oberhalb der Prüfstrecke angeordnete Kamera 186 ermöglicht eine Betriebsüberwachung von außen, auch bei geschlossener Abdeckhaube 142.

Bei den einzelnen Stationen handelt es sich, siehe Fig. 11, 12 um eine erste Prüfstation 101, eine zweite Prüfstation 102, eine dritte Prüfstation 103, eine vierte Prüfstation 104, eine fünfte Prüfstation 105, eine siebte Prüfstation 107 und um eine Auswerfstation 108. Die im ersten Ausführungsbeispiel erforderliche sechste Prüfstation konnte beim zweiten Ausführungsbeispiel aus Gründen die nachfolgend erläutert werden, eingespart werden.

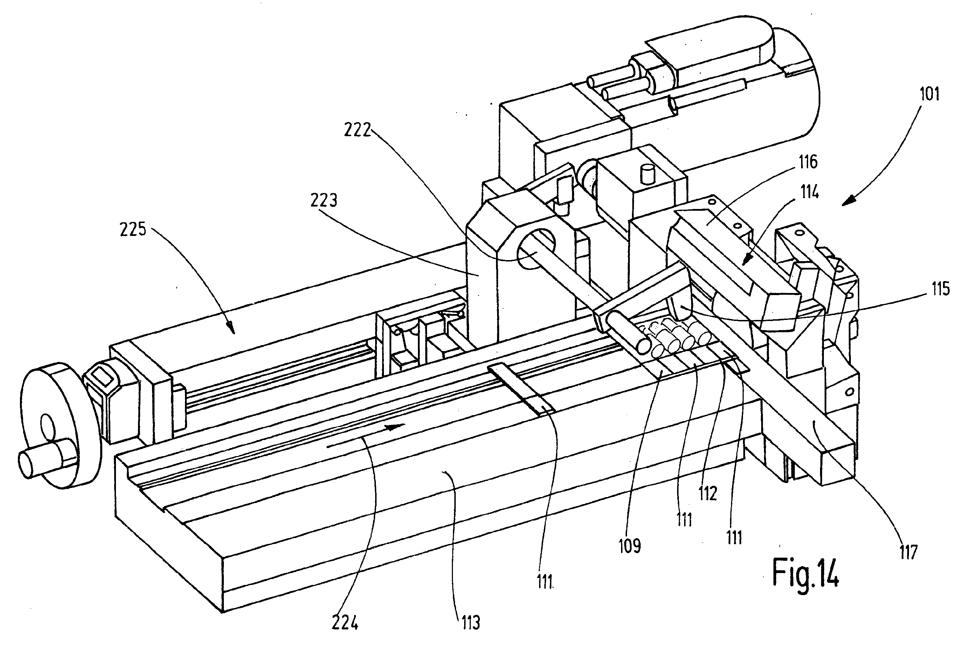

Wie erwähnt, weist beim vorliegenden Beispiel ein Trägerband 109 eine Folge von ampullenartigen Behältern 111 auf, die an Verbindungsstellen 112 miteinander zusammenhängen, die für das Separieren der Behälter 111 vom Behälterband 109 eine Art Soll-Bruchstelle bilden. In Blickrichtung auf die Fig. 14 sind rechts bauchig ausgestaltete Behältererzeugnisse 111 dargestellt und links davon mit Abstand ein einzelner als Flacherzeugnis ausgebildete Behälter 111. Wie die Fig. 11, 12 und 14 zeigen, wird das Behälterband 109 mittels eines Förderers 113 maschinell zur ersten Prüfstation 101 zugeführt. Der Förderer 113 ist als Schrittförderer ausgebildet, der je Vorschubschritt jeweils einen Behälter 111 in eine Separierposition bewegt, in der eine Trenneinrichtung 114 den jeweils letzten Behälter 111 in der Reihe abtrennt. Die Trenneinrichtung 114 weist einen bewegbaren Niederhalter 115, siehe insbesondere Fig. 14, auf, der für einen jeweiligen Trennvorgang den jeweils vorletzten Behälter 111 des Bandes 109 fixiert. Der Niederhalter 115 ist ein L-förmiges Bauteil, das an seinem anderen Ende um eine Schwenkachse 222 schwenkbar ist. Um den Vorschub zu bewirken, ist die Schwenkachse 222 an einem Lagerbock 223 gelagert, der in der Vorschubrichtung 224 durch einen Vorschubmechanismus 225 bewegbar ist.

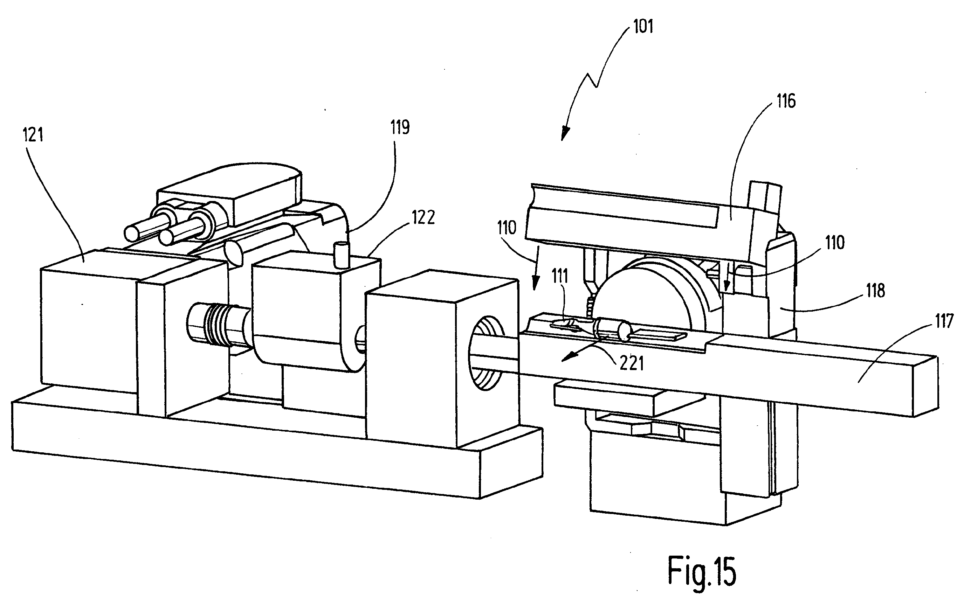

Um den in der Separierposition befindlichen, letzten Behälter 111 abzutrennen, weist die Trenneinrichtung 114, wie am besten aus Fig. 14 und 15 zu ersehen ist, für den abzutrennenden Behälter 111 einen Halter mit bewegbaren Backen 116 und 117 auf, die in der in Fig. 14 und 15 gezeigten Offenstellung den abzutrennenden Behälter 111 umfassen. Für die Bewegung zwischen der gezeigten Offenstellung und einer Schließstellung, in der der abzutrennende Behälter 111 zwischen den Backen 116 und 117 gekammert ist, ist die in der Zeichnung obere Backe 116, wie mit Pfeilen 110 angedeutet, mittels eines Betätigers 118 bewegbar. Beide Backen 116, 117 mit dem zwischen ihnen eingefassten Behälter 111 sind für das Abdrehen der Verbindungsstelle 112 um eine parallel zur Längsrichtung 220 liegende Drehachse 221 mittels eines Drehantriebs 119 drehbar. Von diesem wird das Antriebsdrehmoment über eine Sicherheitskupplung 121 und einen Drehmomentsensor 122 auf die Backen 116, 117 übertragen. Für die Feststellung, ob die Beschaffenheit der Verbindungsstelle 112 dem Soll-Zustand entspricht, wird das vom Drehmomentsensor 122 ermittelte Abdreh-Drehmoment automatisch erfasst.

Für die Versorgung der hintereinander angeordneten Prüfstationen ist eine Transporteinrichtung 130 vorgesehen, die die Behälter 111 nacheinander von Prüfstation zu Prüfstation bewegt. Wie der Fig. 13 deutlicher entnehmbar ist, weist die Transporteinrichtung 130 als eigentliches Transportelement einen Träger 136 in Form einer Leiste auf, die sich, siehe Fig. 12, oberhalb der Prüfstationen 101 bis 105 und 107 entlang der Prüfstrecke erstreckt. Für die zu transportierenden Ampullen 111 weist der Träger 136 an der Unterseite Aufnahmen 138 auf, die in Abständen voneinander angeordnet sind, die den Abständen zwischen den Prüfstationen entlang der Prüfstrecke entsprechen. Für das Halten von Ampullen 111 an der betreffenden Aufnahme 138 und das Freigeben der betreffenden Ampulle 111 weisen die Aufnahmen 138 Vakuumhalter auf, die über Saugleitungen 140 ansteuerbar sind. Für seine Tätigkeit als Förderer nach dem Prinzip eines getakteten Vorschubs ist der Träger 136 entlang der Prüfstrecke hin und her sowie auf und ab bewegbar, wie mit Doppelpfeilen 188 in Fig. 13 angedeutet ist. Dabei nimmt der Träger 136 mit der in Fig. 13 linksseitig äußersten Aufnahme 138 jeweils eine Ampulle 111 aus der Trenneinrichtung 114 an der Prüfstation 101 auf und gibt diese beim folgenden Transportschritt an die nächstfolgende Prüfstation 102 ab, aus der gleichzeitig eine Ampulle 111 mittels der sich rechts anschließenden Aufnahme 138 entnommen und wiederum an die folgende Prüfstation 103 übergeben wird und sofort. Für diese Bewegungsschritte weist die Transporteinrichtung 130 eine Antriebseinrichtung 192 auf, deren Getriebemotor 194 über einen in Fig.12 und 13 verdeckten und daher nicht sichtbaren Kurbeltrieb einen Schlitten 190 entlang einer Führungsschiene 196 horizontal und zusammen mit dieser vertikal bewegt, so dass der mit dem Schlitten 190 verbundene Träger 136 die kombinierten Transportbewegungen ausführt, während die Halteeinrichtungen an den Aufnahmen 138 für Aufnahme und Freigabe der Ampullen über die Saugleitungen 140 gesteuert sind.

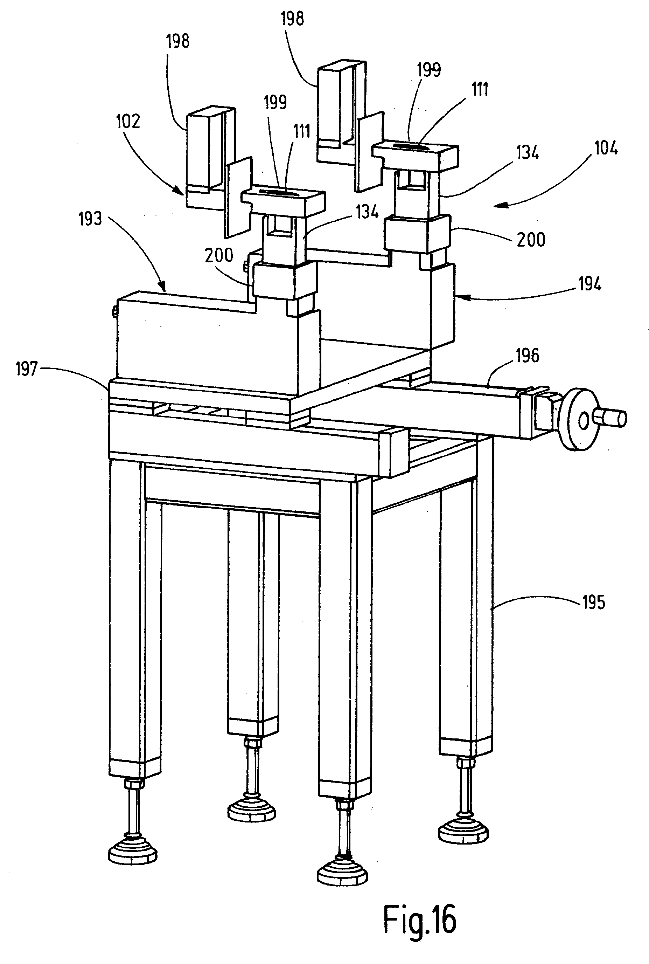

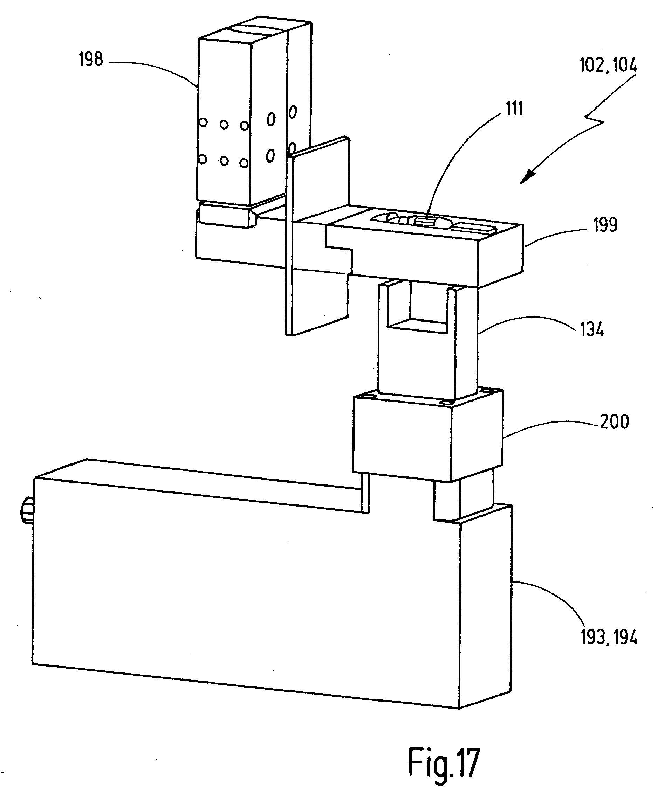

Nachdem in der ersten Prüfstation 101 das Abdreh-Drehmoment beim Separieren des Behälters 111 vom Behälterband 109 erfasst ist, wird der Behälter 111 durch die Transporteinrichtung 130 in die Prüfstation 102 gefördert. Bei dieser handelt es sich um eine Wiegestation zur automatischen Erfassung des Gesamtgewichts des mit Behälterinhalt befüllten Behälters 111. Die Fig. 16 und 17 zeigen Einzelheiten der Wiegeeinrichtung. Wie man insbesondere in Fig. 16 erkennen kann, sind die Wiegeeinrichtungen 193, 194 der Prüfstationen 102 und 104 auf einem eigenen Gestell 195 unabhängig von den übrigen Prüfstationen angeordnet, um die Messgenauigkeit durch Ausschalten von Störeinflüssen der anderen Prüfstationen zu erhöhen. Auf dem Gestell 195 ist eine durch einen Schlitten 196 in einer Tiefenrichtung verschiebbare Platte 197 angeordnet, die zwei Wiegeeinrichtungen 193, 194 aufweist, wobei die eine Wiegeeinrichtung 193 das volle Behältererzeugnis wiegt und die nachfolgende Wiegeeinrichtung 194 den leeren Behälter 111. Durch eine Absenkvorrichtung 198 an jeder Prüfstation 102, 104 ist ein in einem Halter 199 platzierter Behälter 111 auf ein U-förmiges Wiegeelement 134 vertikal absenkbar. Zwischen dem Wiegeelement 134 und der Wiegeeinrichtung 193, 194 ist jeweils ein Distanzstück 200 vorgesehen. Ist der Behälter 111 auf der Wiegeeinrichtung 193, 194 abgesetzt, ist er von dem zuordenbaren Halter 199 entkoppelt, so dass dieser mit seinem Eigengewicht das Messergebnis nicht verfälschen kann.

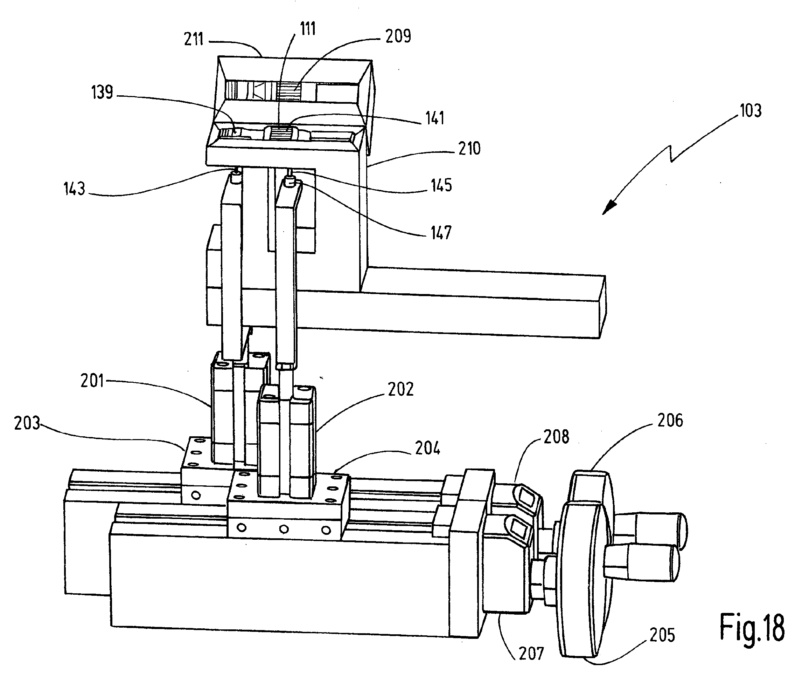

Nach Erfassen des Gewichts gelangt der gewogene, noch befüllte Behälter 111 zur Prüfstation 103, die eine Einrichtung zum Entleeren des Behälterinhalts aufweist. Die wesentlichen Einzelheiten der Entleereinrichtung sind der Fig. 18 entnehmbar. Zum Entleeren des Behälterinhalts wird durch eine in Tiefenrichtung und vertikal bewegbare Punktiernadel 143 am Halsteil 139 eine Belüftungsöffnung gebildet, während am Bodenteil des Behälterhauptteils 141 eine ebenfalls in Tiefenrichtung und vertikal bewegbare Kanüle 145 eine Entleeröffnung bildet. Die Kanüle 145 weist einen Sauganschluss 147 auf, um den Behälter 111 leer zu saugen. Die Punktiernadel 143 und die Kanüle 145 sind dazu an Haltern 201, 202 montiert, die an Schlitten 203, 204 befestigt sind, welche unabhängig voneinander über Handräder 205, 206 in ihrer Position verstellbar sind. Positionsanzeigen 207, 208 erleichtern und beschleunigen die erforderlichen Einstellvorgänge. Während des Entleerens ist der Behälter 111 in einer Aufnahme 209 zwischen einem Halter 210 und einen zuklappbaren Deckel 211 gehalten.

Bei dem nächsten Transportschritt der Transporteinrichtung 130 gelangt der entleerte Behälter 111 aus der Prüfstation 103 zur Prüfstation 104. Diese ist die zweite Wiegestation, die in Aufbau und Funktion der bereits anhand der Fig. 16 und 17 beschriebenen Prüfstation entspricht, wobei nunmehr das Leergewicht des zuvor entleerten Behälters 111 erfasst wird. Als Prüfergebnis wird so durch den Vergleich Gesamtgewicht zu Leergewicht die Masse des bevorzugt flüssigen Behälterinhalts exakt festgestellt.

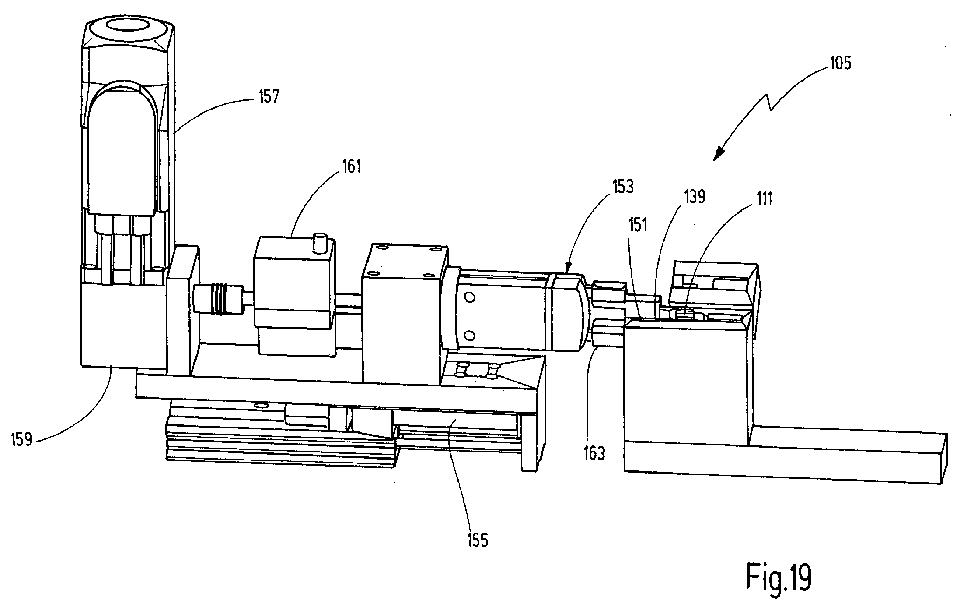

Die nächste Prüfstation 105 (siehe Fig. 19) weist eine Abdreheinrichtung 153 auf, die ein am Halsteil 139 des Behälters 111 angeformtes Endteil in Form eines sog. Drehknebels 151 durch Abdrehen vom Behälter 111 entfernt und hierbei das zum Abdrehen erforderliche Drehmoment erfasst. Die Abdreheinrichtung 153 weist hierfür eine auf einem Schlitten 155 verschiebbare Abdreheinheit auf, die von einem Drehantrieb 157 über eine Sicherheitskupplung 159 und einen Drehmomentsensor 161 eine steuerbare Klemmzange 163 antreibt, die durch Verschieben des Schlittens 155 den Knebel 151 erfasst und festklemmt, so dass dieser mittels des Antriebs 157 abdrehbar ist. Das erfasste Abdreh-Drehmoment signalisiert, ob die Verbindung des Knebels 151 mit dem Behälter 111 dem Soll-Zustand entspricht.

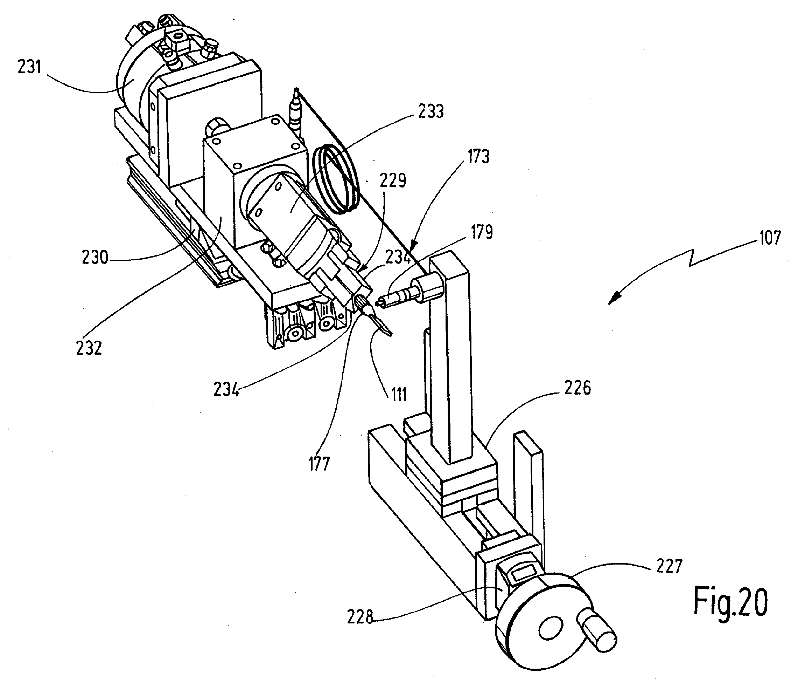

Beim nächsten Schritt gelangt der Behälter 111 zur Prüfstation 107 (siehe Fig. 20), die eine optische Messeinrichtung 173 aufweist, um die Wandstärke der Behälterwände 177 zu erfassen. Die Messeinrichtung 173 weist hierfür einen bewegbaren Laser-Messsensor 179 auf, der auf einem Schlitten 226 mit einem Handrad 227 in eine geeignete Position verfahrbar ist. Um eine genaue Positionierung zu ermöglichen, ist dem Schlitten 226 ein Positionssensor 228 zugeordnet. Der Messsensor 179 ist so ausgebildet, dass er die Dicke von gegenüberliegenden Behälterwänden 177 in einem Schritt messen kann. Der Behälter kann dazu von einer Greifeinrichtung 229 gegriffen und gedreht werden, die auf einem Schlitten 230 bewegbar angeordnet ist. Die Greifeinrichtung 229 umfasst einen Servomotor 231 und einen an einem Lagerbock 232 drehbar befestigten Greifer 233 mit Greiffingern 234. Durch die Lasermessung kann das beim ersten Ausführungsbeispiel noch erforderliche Zersägen oder das sonstige Öffnen des Behälters 111 eingespart werden.

Nach Erfassung des Wanddicken-Istwertes in der Prüfstation 107 gelangt der Behälter 111 abschließend zur Auswerfstation 108 (siehe Fig. 12), die den fertig geprüften Behälter 111 in einen Wertstoffsammler 183 auswirft.

Aufgrund des modularen Aufbaus der Komponenten für die Prüfvorrichtungen lassen sich in einem weiten Anwendungsband die Halteeinsätze für die Behälter- oder Ampullenerzeugnisse variieren, so dass die verschiedensten Arten an Produkterzeugnissen sich in vorgebbaren Eigenschaften mit nur einer Prüfvorrichtung prüfen lassen. So können Behälter oder Ampullenerzeugnisse mit zylindrischen, ovalen oder mehreckigen Querschnittsformen mit einer Prüfvorrichtung bei entsprechender Adaptierung der Aufnahmemodule überprüft werden. Auch lassen sich Einzelampullen oder Einzelbehälter genauso prüfen, wie bandartig zusammengefasste Behälter oder Ampullenerzeugnisse. Es versteht sich von selbst, dass nicht die gesamte Produktionsmenge einer Herstellmaschine der Überprüfung unterzogen wird, sondern nur eine statistisch relevante Stichprobe aus der fortlaufenden Produktionsmenge für die Überprüfung herausgenommen wird. Des Weiteren können für die Betätigung der Prüfstationen verschiedenste Antriebsmittel eingesetzt werden. Neben hydraulischen und pneumatischen Antrieben können elektrische Antriebe, wie Schrittmotoren und dergleichen mehr, eingesetzt werden.

Der größte Vorteil der automatischen Prüfung liegt darin, dass die erhaltenen Prüfwerte duplizierbar sind und keiner subjektiven Bewertung eines Prüfpersonals unterliegen. Die insoweit automatisch erhaltenen Prüfwerte sind geeignet, verlässliche Aussagen über die Einstellparameter der im Ablaufprozess vorgeschalteten Herstellmaschine zu treffen. So kann beispielsweise bei einer zu geringen Wandstärke mehr Kunststoffmaterial in die formgebende Maschine eingebracht werden. Erweist sich die Kunststoffqualität als zu schlecht, lässt sich das zuzuführende Kunststoffmaterial ändern, insbesondere kann eine andere Mischung an einzusetzendem Kunststoffmaterial vorgenommen werden. Stimmt die Behälter- oder Ampullenfüllmenge nicht, lässt sich automatisch die Zufuhrmenge an der Herstellmaschine entsprechend steuern. Insbesondere kann durch die langfristige Überwachung der Prüfergebnisse ein Verschleiß an der Herstellmaschine festgestellt werden und bei Erreichen eines vorgebbaren Verschleißwertes lassen sich Teile der Maschine tauschen; beispielsweise können verschlissene Herstellformen durch Neuformen ersetzt werden. Eine geeignete Maschinensteuerung nebst Speicherprogrammierung unterstützt die dahingehenden Adaptionsvorgänge zwischen der Prüfvorrichtung und der jeweiligen Herstellmaschine.

## Patentansprüche

1. Verfahren zur Feststellung des Vorliegens von vorgegebenen Eigenschaften eines im Blasform-, Füll- und Siegelverfahren hergestellten Behältererzeugnisses (9, 11, 109, 111), insbesondere aus Kunststoffmaterial bestehend, wobei in mindestens einer Prüfstation (1-7, 101-107) einer Prüfvorrichtung der Ist-Wert zumindest einer vorgegebenen Eigenschaft automatisch erfasst und mit dem Soll-Wert dieser Eigenschaft verglichen wird, **dadurch gekennzeichnet, dass**
- bei einem Behältererzeugnis in Form eines Behälterbandes (9, 109) mit aus Kunststoff bestehenden Behältern (11, 111), die an Verbindungsstellen trennbar miteinander zusammenhängen, die Behälter (11, 111) maschinell separiert werden und die beim Separieren erforderliche Trennkraft erfasst wird, oder
- in einer eigenständigen, vorzugsweise ersten Prüfstation (1, 101) Behälter durch Abdrehen vom Behälterband (9, 109) separiert werden und das zum Abdrehen erforderliche Drehmoment automatisch erfasst wird, und/oder
- bei mit einem Behälterinhalt befüllten Behältern (11, 111) die separierten Behälter (11, 111) maschinell in eine Prüfstation (2, 102) verbracht und in dieser für eine automatische Erfassung ihres Gesamtgewichts gewogen werden, und
die gewogenen Behälter (11, 111) maschinell in eine Prüfstation (3, 103) verbracht und dort entleert werden, und
die entleerten Behälter (11, 111) maschinell in eine Prüfstation (4, 104) verbracht und in dieser für eine Erfassung ihres Leergewichts gewogen werden und für die Feststellung des Gewichts des Behälterinhalts das erfasste Gesamtgewicht automatisch mit dem erfassten Leergewicht verglichen wird.

2. Verfahren nach Anspruch 1, **dadurch gekennzeichnet, dass** bei Behältern (11, 111), die an einem Halsteil (39, 139) ein einem Entnahmebereich zugeordnetes Endteil (51, 151) aufweisen, das durch eine Drehbewegung vom Behälterhauptteil (41, 141) entfernbar ist, die Behälter (11, 111) maschinell in eine Prüfstation (5, 105) verbracht werden, in der das Endteil (51, 151) maschinell abgedreht und das zum Abdrehen erforderliche Drehmoment automatisch erfasst werden.

3. Verfahren nach Anspruch 1 oder 2, **dadurch gekennzeichnet, dass** die Behälter (11) maschinell in eine Prüfstation (6) verbracht werden, in der maschinell ein Einschnitt (75), der den Querschnitt zumindest eines Teils der Behälterwand (77) freilegt, gebildet wird.

4. Verfahren nach Anspruch 3, **dadurch gekennzeichnet, dass** die geschnittenen Behälter (11, 111) maschinell in eine Prüfstation (7, 107) verbracht werden, in der die Dicke zumindest einer Behälterwand (77, 177) automatisch erfasst wird.

5. Verfahren nach einem der vorstehenden Ansprüche, **dadurch gekennzeichnet, dass** die Behälter (11, 111) nach Erfassung der Wanddicke maschinell in eine Auswerfstation (8, 108) verbracht und von dieser aus der Prüfvorrichtung ausgetragen werden.

6. Verfahren nach Anspruch 1 oder 2, **dadurch gekennzeichnet, dass** in mindestens einer der Prüfstationen (107) oder einer diesen nachfolgenden Prüfstationen zerstörungsfrei die Behälterdicke an mindestens einer Stelle des jeweiligen zu prüfenden Behälters (111) ermittelt wird, vorzugsweise mittels Ultraschall oder mittels eines optischen Messverfahrens.

7. Verfahren nach einem der vorstehenden Ansprüche, **dadurch gekennzeichnet, dass** mittels elektronischer Erfassungs-, Speicher- und Auswertemedien an mindestens einer der messenden Prüfstationen deren Messwerte für zumindest einen Teil der Behälter (11, 111) erfasst und gespeichert werden zwecks Erhalt einer statistischen Auswertung, in welche Richtung (trending) und um welchen Betrag sich die ermittelten Ist-Werte von den Sollwert-Vorgaben entfernen.

8. Verfahren nach Anspruch 7, **dadurch gekennzeichnet, dass** die erhaltenen Differenzwerte zwischen Ist- und Sollwert-Vorgaben an eine Maschinensteuerung einer Herstellvorrichtung weitergeleitet werden mit der Maßgabe, während oder mit Beginn oder Ende des Herstellprozesses die Herstellparameter derart zu optimieren, dass die Differenzwerte gegen Null gehen und/oder dass das der Herstellvorrichtung zuzuführende Fertigungsmaterial von seinen Materialeigenschaften an die Vorgaben angepasst wird.

9. Vorrichtung zur Durchführung des Verfahrens nach einem der vorstehenden Ansprüche, mit zumindest einer Prüfstation (1-7, 101-107), die eine Einrichtung für die automatische Erfassung des Ist-Wertes zumindest einer vorgegebenen Eigenschaft des betreffenden Behältererzeugnisses (9, 11, 109, 111) aufweist, **dadurch gekennzeichnet, dass**
- sie bei einem Behältererzeugnis in Form eines Behälterbandes (9, 109) mit aus Kunststoff bestehenden Behältern (11, 111), die an Verbindungsstellen (12, 112) trennbar miteinander zusammenhängen, eine erste Prüfstation (1, 101) mit einer Trenneinrichtung (14, 114) zur maschinellen Separierung der Behälter (11, 111) vom Behälterband (9, 109) aufweist, oder
- die erste Prüfstation (1, 101) für den jeweiligen, vom Behälterband (9, 109) zu separierenden Behälter (11, 111) einen diesen teilweise umfassenden Halter (16, 17, 116, 117) aufweist, der durch einen Drehantrieb (19, 119) für das Abdrehen des umfassten Behälters (11, 111) drehbar ist, und der Drehantrieb (19, 119) einen Drehmomentsensor (22, 122) zur Erfassung des Abdreh-Drehmomentes aufweist, und/oder
- eine Prüfstation (2, 102) durch Wiegen automatisch das Gesamtgewicht eines mit einem Behälterinhalt befüllten, separierten Behälters (11, 111) erfasst, und
eine Prüfstation (3, 103) eine Einrichtung (43, 45, 143, 145) zum Entleeren des Behälterinhalts des betreffenden Behälters (11, 111) aufweist, und
eine Prüfstation (4, 104) eine Wiegeeinrichtung (34, 134) zur automatischen Erfassung des Gewichts eines entleerten Behälters (11, 111) aufweist.

10. Vorrichtung nach Anspruch 9, **dadurch gekennzeichnet, dass** eine Transporteinrichtung (25, 30, 125, 130) vorgesehen ist, die Aufnahmen (24, 38, 124, 138) aufweist, die durch die erste Prüfstation (1, 101) mit einem jeweiligen Behälter (11, 111) bestückbar sind und die zu weiteren, entlang einer Prüfstrecke angeordneten Prüfstationen (2-7, 102-107) bewegbar sind.

11. Vorrichtung nach einem der Ansprüche 9 oder 10, **dadurch gekennzeichnet, dass** die Transporteinrichtung ein motorisch antreibbares Karussell (25) aufweist, das die Aufnahmen (24) entlang einer kreisrunden Prüfstrecke zu jeweils weiteren, an der Prüfstrecke angeordneten Prüfstationen (2-7) bewegt.

12. Vorrichtung nach einem der Ansprüche 9 bis 11, **dadurch gekennzeichnet, dass** an der kreisförmigen Prüfstrecke vor der ersten Prüfstation (1) eine Auswerfstation (8) für das maschinelle Auswerfen des Behälters (11) aus der betreffenden Aufnahme (24) der Transporteinrichtung (25) vorgesehen ist.

13. Vorrichtung nach einem der Ansprüche 9 bis 12, **dadurch gekennzeichnet, dass** die Aufnahmen (24) ein Lagerungsteil (26) für Behälter (11) und ein bewegbares Deckelteil (27) aufweisen, das zwischen einer Schließstellung, in der es einen Teilbereich der gelagerten Behälter (11) umschließt, und einer vom Lagerungsteil (26) abgehobenen Offenstellung bewegbar ist, und dass die Transporteinrichtung (25) eine Steueranordnung (31, 49) aufweist, mittels deren die Deckelteile (27) bedarfsweise in die Schließstellung und in die Offenstellung überführbar sind.

14. Vorrichtung nach einem der Ansprüche 9 bis 13, **dadurch gekennzeichnet, dass** die Prüfstationen (101-107) entlang einer sich in einer Längsrichtung erstreckenden Prüfstrecke angeordnet sind und dass die Transporteinrichtung (130) ein die Behälter (11) nacheinander von Prüfstation zu Prüfstation bewegendes Transportelement (136) aufweist.

15. Vorrichtung nach Anspruch 14, **dadurch gekennzeichnet, dass** als Transportelement (136) ein entlang der Prüfstrecke hin und her sowie auf- und abbewegbarer Träger vorgesehen ist, an dem die Aufnahmen (138) in Abständen angeordnet sind, die den Abständen zwischen den Prüfstationen entsprechen, und dass die Aufnahmen (138) zum Halten und Freigeben eines jeweiligen Behälters (111) eine Einrichtung (140) aufweisen, die derart steuerbar ist, dass die Behälter (111) nacheinander an einer Prüfstation aufnehmbar und einer nachfolgenden Prüfstation abgebbar sind.

16. Vorrichtung nach einem der Ansprüche 9 bis 15, **dadurch gekennzeichnet, dass** eine zweite Prüfstation (2, 102) eine Wiegeeinrichtung (34, 134) zur automatischen Erfassung des Gewichts eines mit einem Behälterinhalt befüllten Behälters (11, 111) aufweist.

17. Vorrichtung nach einem der Ansprüche 9 bis 16, **dadurch gekennzeichnet, dass** für Behälter (11, 111), die an einem Halsteil (39, 139) ein Endteil (51, 151) aufweisen, das durch eine Drehbewegung vom Behälterhauptteil (41, 141) entfernbar ist, eine Prüfstation (5, 105) mit einer Abdreheinrichtung (53, 153) vorgesehen ist, die einen Drehantrieb (57, 157) und einen Drehmomentsensor (61, 161) zur Erfassung des zur Entfernung des Endteils (51, 151) erforderlichen Drehmoments aufweist.

18. Vorrichtung nach einem der Ansprüche 9 bis 17, **dadurch gekennzeichnet, dass** eine Prüfstation (6) eine Schneideinrichtung (65) zur Bildung eines den Querschnitt mindestens eines Wandteils (77) des betreffenden Behälters (11) freilegenden Einschnittes (75) aufweist.

19. Vorrichtung nach einem der Ansprüche 9 bis 18, **dadurch gekennzeichnet, dass** eine Prüfstation (7, 107) eine Messeinrichtung (79, 81, 179) zur automatischen Erfassung der Wanddicke einer geschnittenen Behälterwand (77, 177) aufweist.

20. Vorrichtung nach einem der Ansprüche 9 bis 19, **dadurch gekennzeichnet, dass** in mindestens einer der Prüfstationen (1-5, 101-107) oder einer diesen nachfolgenden Prüfstationen zerstörungsfrei die Behälterdicke an mindestens einer Stelle des jeweiligen zu prüfenden Behälters (111) ermittelt ist, vorzugsweise mittels Ultraschall oder mittels eines optischen Messverfahrens.

## Claims

1. A method for establishing the presence of specified characteristics of a container product (9, 11, 109, 111) produced by the blow moulding, filling and sealing method, in particular made of plastic material, the actual value of at least one specified characteristic being automatically recorded in at least one test station (1-7, 101-107) and being compared with the target value of this characteristic, **characterised in that**
- in a container product in the form of a strip of containers (9, 109) with containers (11, 111) made of plastic which are connected to one another separably at connection points, the containers (11, 111) are separated mechanically, and the separating force required for the separation is recorded, or
- in an independent, preferably first test station (1, 101) containers are separated by twisting off of the strip of containers (9, 109), and the torque required for the twisting off is automatically recorded, and/or
- with containers (11, 111) filled with a container content, the separated containers (11, 111) are brought mechanically into a test station (2, 102) and are weighed in the latter in order to record their overall weight automatically, and
the weighed containers (11, 111) are brought mechanically into a test station (3, 103) and are emptied here, and
the emptied containers (11, 111) are brought mechanically into a test station (4, 104) and are weighed in the latter in order to record their empty weight, and the recorded overall weight is automatically compared with the recorded empty weight in order to establish the weight of the container content.

2. The method according to Claim 1, **characterised in that** with containers (11, 111) which have at a neck part (39, 139) an end part (51, 151) assigned to a removal region, which end part can be removed from the main part of the container (41, 141) by a turning motion, the containers (11, 111) are brought mechanically into a test station (5, 105) in which the end part (51, 151) is mechanically twisted off and the torque required for the twisting off is automatically recorded.

3. The method according to Claim 1 or 2, **characterised in that** the containers (11) are brought mechanically into a test station (6) in which a cut (75) which exposes the cross-section of at least part of the container wall (77) is formed mechanically.

4. The method according to Claim 3, **characterised in that** the cut containers (11, 111) are brought mechanically into a test station (7, 107) in which the thickness of at least one container wall (77, 177) is automatically recorded.

5. The method according to any of the preceding claims, **characterised in that** after recording the wall thickness, the containers (11, 111) are brought mechanically into a discarding station (8, 108) and are discharged by the latter from the test device.

6. The method according to Claim 1 or 2, **characterised in that** in at least one of the test stations (107) or in one of the following test stations the container thickness is determined non-destructively at at least one point of the respective container (111) to be tested, preferably by means of ultrasound or by means of an optical measuring method.

7. The method according to any of the preceding claims, **characterised in that** by means of electronic recording, storage and evaluation media at at least one of the measuring test stations, the measurements of the latter for at least some of the containers (11, 111) are recorded and stored for the purpose of obtaining a statistical evaluation of in which direction (trending) and by what amount the actual values determined differ from the specified target values.

8. The method according to Claim 7, **characterised in that** the difference values between the actual and the target value specifications that are obtained are forwarded to a machine control system of a production device with the proviso that the production parameters are optimised during, at the start or at the end of the production process such that the difference values are almost zero and/or that the production material to be delivered to the production device has material characteristics adapted to the specifications.

9. The device for performing the method according to any of the preceding claims, comprising at least one test station (1-7, 101-107) that has a device for automatically recording the actual value of at least one specified characteristic of the respective container product (9, 11, 109, 111), **characterised in that**
- in a container product in the form of a strip of containers (9, 109) with containers (11, 111) made of plastic which are connected to one another separably at connection points (12, 112), it has a first test station (1, 101) with a separating device (14, 114) for mechanically separating the containers (11, 111) from the strip of containers (9, 109),
- the first test station (1, 101) has a holder (16, 17, 116, 117) for the respective container (11, 111) to be separated from the strip of containers (9, 109), which holder partially encompasses said container and can be turned by a rotary drive (19, 119) in order to twist off the encompassed container (11, 111), and the rotary drive (19, 119) has a torque sensor (22, 122) for recording the twisting-off torque, and/or
- a test station (2, 102) automatically records the overall weight of a separated container (11, 111) filled with a container content by weighing, and
a test station (3, 103) has a device (43, 45, 143, 145) for emptying the container content of the respective container (11, 111), and
a test station (4, 104) has a weighing device (34, 134) for automatically recording the weight of an emptied container (11, 111).

10. The device according to Claim 9, **characterised in that** a transportation device (25, 30, 125, 130) is provided that has receivers (24, 38, 124, 138) that can be equipped by the first test station (1, 101) with a respective container (11, 111) and which can be moved to additional test stations (2-7, 102-107) arranged along a test line.

11. The device according to either of Claims 9 or 10, **characterised in that** the transportation device has a motor-driven carrousel (25) that moves the receivers (24) along a circular test line to each of the additional test stations (2-7) arranged on the test line.

12. The device according to any of Claims 9 to 11, **characterised in that** a discarding station (8) for mechanically discarding the container (11) from the respective receiver (24) of the conveyance device (25) is provided on the circular test line before the first test station (1).

13. The device according to any of Claims 9 to 12, **characterised in that** the receivers (24) have a bearing part (26) for containers (11) and a moveable cover part (27) that can be moved between a closed position, in which it encloses a part-region of the mounted container (11) and an open position raised from the bearing part (26), and that the transportation device (25) has a control arrangement (31, 49) by means of which the cover parts (27) can be moved into the closed position and into the open position as required.

14. The device according to any of Claims 9 to 13, **characterised in that** the test stations (101-107) are arranged along a test line extending in a longitudinal direction and that the transportation device (130) has a transportation element (136) moving the containers (11) in succession from test station to test station.

15. The device according to Claim 14, **characterised in that** a carrier that can be moved back and forth and up and down along the test line is provided as a transportation element (136), on which carrier the receivers (138) are arranged spaced apart from one another, the spaces corresponding to those between the test stations, and that the receivers (138) for holding and releasing a respective container (111) have a device (140) which can be controlled such that the containers (111) can be received in succession at a test station and can be delivered to a subsequent test station.

16. The device according to any of Claims 9 to 15, **characterised in that** a second test station (2, 102) has a weighing device (34, 134) for automatically recording the weight of a container (11, 111) filled with a container content.

17. The device according to any of Claims 9 to 16, **characterised in that** for containers (11, 111) that have an end part (51, 151) on a neck part (39, 139), which end part can be removed from the main part of the container (41, 141) by a turning motion, a test station (5, 105) is provided with a twisting-off device (53, 153) that has a rotary drive (57, 157) and a torque sensor (61, 161) for recording the torque required to remove the end part (51, 151).

18. The device according to any of Claims 9 to 17, **characterised in that** a test station (6) has a cutting device (65) for forming a cut (75) exposing the cross-section of at least one wall part (77) of the respective container (11).

19. The device according to any of Claims 9 to 18, **characterised in that** a test station (7, 107) has a measuring device (79, 81,179) for automatically recording the wall thickness of a cut container wall (77, 177).

20. The device according to any of Claims 9 to 19, **characterised in that** in at least one of the test stations (1-5, 101-107) or one of the test stations following the latter, the container thickness is determined non-destructively at at least one point of the respective container (111) to be tested, preferably by means of ultrasound or by means of an optical measuring method.

## Revendications

1. Procédé de constatation de la présence de propriétés données à l'avance d'un produit (9, 11, 109, 111) de récipient, notamment en matière plastique, fabriqué dans le procédé de moulage par soufflage de remplissage et de soudure, dans lequel on relève automatiquement, dans au moins un poste (1 à 7, 101 à 107) de contrôle d'un dispositif de contrôle, la valeur réelle d'au moins une propriété donnée à l'avance et on la compare à la valeur de consigne de cette propriété, **caractérisé en ce que**
- pour un produit de récipient sous la forme d'une bande (9, 109) de récipient, ayant des récipients (11, 111) en matière plastique qui sont rattachés les uns aux autres de manière séparable en des points de liaison, on sépare à la machine les récipients (11, 111) et on relève la force de séparation nécessaire à la séparation, ou
- dans un poste (1, 101) de contrôle autonome, de préférence un premier poste, on sépare des récipients en les enlevant par rotation de la bande (9, 109) de récipient et on relève automatiquement le couple de rotation nécessaire à l'enlèvement par rotation, et/ou
- pour des récipients (11, 111) emplis d'un contenu, on porte les récipients (11, 111) séparés à la machine dans un poste (2, 102) de contrôle et on les y pèse pour une détection automatique de leur poids total, et on porte les récipients (11, 111) pesés à la machine dans un poste (3, 103) de contrôle et on les y vide, et on porte les récipients (11, 111) vidés à la machine dans un poste (4, 104) de contrôle et on les y pèse pour une détection de leur poids à vide et, pour la constatation du poids du contenu du récipient, on compare le poids total relevé automatiquement au poids à vide relevé.

2. Procédé suivant la revendication 1, **caractérisé en ce que** pour des récipients (11, 111) qui ont, à un col (39, 139) une partie (51, 151) d'extrémité associée à une région de prélèvement qui peut être retirée par un mouvement de rotation de la partie (41, 141) principale du récipient, on porte les récipients (11, 111) à la machine dans un poste (5, 105) de contrôle dans lequel on enlève, par rotation à la machine, la partie (51, 151) d'extrémité et on relève automatiquement le couple de rotation nécessaire à l'enlèvement par rotation.

3. Procédé suivant la revendication 1 ou 2, **caractérisé en ce que** l'on porte les récipients (11, 111) à la machine dans un poste (6) de contrôle où on forme à la machine une entaille (75), libérant la section transversale d'au moins une partie de la paroi (77) du récipient.

4. Procédé suivant la revendication 3, **caractérisé en ce que** l'on porte les récipients (11, 111) entaillés à la machine dans un poste (7, 107) de contrôle, où l'on relève automatiquement l'épaisseur d'au moins une paroi (77, 177) du récipient.

5. Procédé suivant l'une des revendications précédentes, **caractérisé en ce que** l'on porte les récipients (11, 111), après avoir relevé l'épaisseur de la paroi, à la machine dans un poste (8, 108) d'éjection et on les en éjecte du dispositif de contrôle.

6. Procédé suivant la revendication 1 ou 2, **caractérisé en ce que** dans au moins l'un des postes (107) de contrôle ou l'un des postes de contrôle le suivant, on détermine, sans destruction, l'épaisseur en au moins un point du récipient (111) à contrôler, de préférence au moyen d'un procédé de mesure par ultrasons ou au moyen d'un procédé de mesure par voie optique.

7. Procédé suivant l'une des revendications précédentes, **caractérisé en ce qu'**au moyen d'agents électroniques de détection, de mémoire et d'exploitation sur au moins l'un des postes de contrôle qui effectue la mesure, on en relève les valeurs de mesure pour au moins une partie des récipients (11, 111) et on les mémorise en vue d'obtenir une exploitation statistique pour savoir dans quelle direction (trending) et dans quelle mesure les valeurs réelles déterminées s'éloignent des prescriptions de la valeur de consigne.

8. Procédé suivant la revendication 7, **caractérisé en ce que** l'on achemine les valeurs de différence obtenues entre la valeur réelle et les prescriptions de valeur de consigne vers une commande de machine d'un dispositif de fabrication en faisant en sorte, pendant, ou au début, ou à la fin du processus de fabrication, d'optimiser les paramètres de fabrication de manière à ce que les valeurs de différence tendent vers zéro et/ou **en ce que** l'on adapte aux prescriptions les propriétés de la matière de fabrication à apporter au dispositif de fabrication.

9. Installation pour effectuer le procédé suivant l'une des revendications précédentes, comprenant au moins un poste (1 à 7, 101 à 107) de contrôle qui a un dispositif de détection automatique de la valeur réelle d'au moins une propriété donnée à l'avance du produit (9, 11, 109, 111) de récipient concerné, **caractérisée en ce que**
- elle a, pour un produit de récipient sous la forme d'une bande (9, 109) de récipient ayant des récipients (11, 111) en matière plastique qui sont rattachés les uns aux autres de manière séparable en des points (12, 112) de liaison, un premier poste (1, 101) de contrôle ayant un dispositif (14, 114) de séparation pour la séparation à la machine des récipients (11, 111) de la bande (9, 109) de récipient, ou
- le premier poste (1, 101) de contrôle a, pour le récipient (11, 111) à séparer de la bande (9, 109) de récipient, un support (16, 17, 116, 117) l'entourant partiellement qui, par un entraînement (19, 119) en rotation, peut tourner pour la séparation par rotation du récipient (11, 111) entouré, et l'entraînement (19, 119) en rotation a un capteur (22, 122) du couple du rotation pour relever le couple de rotation d'enlèvement par rotation, et/ou
- un poste (2, 102) de contrôle relève, par pesée, automatiquement le poids total d'un récipient (11, 111) séparé et empli d'un contenu, et
un poste (3, 103) de contrôle a un dispositif (43, 45, 143, 145) pour vider le récipient (11, 111) de son contenu, et
un poste (4, 104) de contrôle a un dispositif (34, 134) de pesée pour relever automatiquement le poids d'un récipient (11, 111) vidé.

10. Installation suivant la revendication 9, **caractérisée en ce qu'**il est prévu un dispositif (25, 30, 125, 130) de transport qui a des logements (24, 38, 124, 138), lesquels peuvent être garnis d'un récipient (11, 111) respectif par le premier poste (1, 101) de contrôle et qui peuvent être acheminés à d'autres postes (2 à 7, 102 à 107) de contrôle disposés le long d'une voie de contrôle.

11. Installation suivant l'une des revendications 9 ou 10, **caractérisée en ce que** le dispositif de transport a un carrousel (25) qui peut être entraîné par un moteur et qui achemine les logements (24) le long d'une voie de contrôle circulaire vers d'autres postes (2 à 7) de contrôle, disposés sur la voie de contrôle.

12. Installation suivant l'une des revendications 9 à 11, **caractérisée en ce qu'**il est prévu, sur la voie de contrôle circulaire avant le premier poste (1) de contrôle, un poste (8) d'éjection pour l'éjection de la machine du récipient (11) du logement (24) concerné du dispositif (25) de transport.

13. Installation suivant l'une des revendications 9 à 12, **caractérisé en ce que** les logements (24) ont une partie (26) de stockage de récipient (11) et une partie mobile (27) de couvercle qui est mobile entre une position de fermeture dans laquelle elle entoure une zone partielle du récipient (11) stocké et une position d'ouverture soulevée de la partie (26) de stockage, et **en ce que** le dispositif (25) de transport a un système (31, 49) de commande au moyen duquel les parties (27) de couvercle peuvent, en cas de besoin, passer dans la position de fermeture et dans la position d'ouverture.

14. Installation suivant l'une des revendications 9 à 13, **caractérisée en ce que** les postes (101 à 107) de contrôle sont disposés le long d'une voie de contrôle s'étendant dans une direction longitudinale et **en ce que** le dispositif (130) de transport a un élément (136) de transport déplaçant les récipients (11) l'un après l'autre, d'un poste de contrôle à l'autre.

15. Installation suivant la revendication 14, **caractérisée en ce qu'**il est prévu comme élément (136) de transport, un support pouvant aller et venir le long de la voie de contrôle ainsi que pouvant se soulever et s'abaisser, sur lequel les logements (138) sont disposés à des distances qui correspondent aux distances entre les postes de contrôle, et **en ce que** les logements (138) ont, pour maintenir et libérer un récipient (111) respectif, un dispositif (140) qui peut être commandé de manière à ce que les récipients (111) puissent être reçus les uns après les autres à un poste de contrôle et être cédés à un poste de contrôle suivant.

16. Installation suivant l'une des revendications 9 à 15, **caractérisée en ce qu'**un deuxième poste (2, 102) de contrôle a un dispositif (34, 134) de pesée pour relever automatiquement le poids d'un récipient (11, 111) empli d'un contenu.

17. Installation suivant l'une des revendications 9 à 16, **caractérisée en ce que**, pour des récipients (11, 111) qui ont, à une partie (39, 139) de col, une partie (51, 151) d'extrémité qui peut, par un mouvement de rotation, être enlevée de la partie (41, 141) principale du récipient, il est prévu un poste (5, 105) de contrôle ayant un dispositif (53, 153) d'enlèvement par rotation qui a un entraînement (57, 157) par rotation et un capteur (61, 161) de couple de rotations pour la détection du couple de rotation nécessaire à l'enlèvement de la partie (51, 151) d'extrémité.

18. Installation suivant l'une des revendications 9 à 17, **caractérisée en ce qu'**un poste (6) de contrôle a un dispositif (65) de coupe pour former une entaille (75) libérant la section transversale d'au moins une partie (77) de paroi du récipient (11) concerné.

19. Installation suivant l'une des revendications 9 à 18, **caractérisée en ce qu'**un poste (7, 107) de contrôle a un dispositif (79, 81, 179) de mesure pour relever automatiquement l'épaisseur d'une paroi (77, 177) entaillée de récipient.

20. Installation suivant l'une des revendications 9 à 19, **caractérisée en ce que**, dans au moins l'un des postes (1 à 5, 101 à 107) de contrôle, ou l'un des postes de contrôle suivants, l'épaisseur du récipient est déterminée sans destruction en au moins un point du récipient (111) à contrôler, de préférence au moyen d'un procédé de mesure par ultrasons ou au moyen d'un procédé de mesure par voie optique.
